# EUROPEAN PATENT APPLICATION

(11) **EP 4 583 468 A1**
(43) Date of publication of application: **09.07.2025**
(21) Application number: 22960493.9
(22) Date of filing: 14.10.2022
(51) Int. Cl.: H04L 27/00

(54) **WIRELESS COMMUNICATION METHOD, TERMINAL DEVICE, AND NETWORK DEVICE**

(30) Priority: 30.09.2022 WO PCT/CN2022/123332
(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); CAO, Jianfei, Dongguan, Guangdong 523860 (CN)
(74) Representative: Taor, Simon Edward William
(86) International application number: PCT/CN2022/125516
(87) International publication number: WO 2024/065890

(57) **Abstract**

Embodiments of the present application provide a wireless communication method, a terminal device, and a network device. The terminal device can flexibly determine an uplink transmission scheme, and improve throughput of a system. The wireless communication method comprises: a terminal device receiving first DCI; the terminal device determining a transmission scheme for first uplink information according to at least one signaling in the first DCI, the transmission scheme for the first uplink information being one of the following: SDM, SFN, TDM, FDM, or a single TRP or single antenna panel transmission scheme; and the terminal device sending the first uplink information according to the transmission scheme for the first uplink information.

## Description

### CROSS-REFERENCE TO RELATED APPLICATION

The present disclosure claims priority to PCT patent Application No. PCT/CN2022/123332 filed with the China National Intellectual Property Administration (CNIPA) on September 30, 2022 and entitled "WIRELESS COMMUNICATION METHOD, TERMINAL DEVICE AND NETWORK DEVICE", the content of which is hereby incorporated by reference in its entirety.

### TECHNICAL FIELD

Embodiments of the present disclosure relate to the field of communications, and in particular to a method for wireless communication, a terminal device and a network device.

### BACKGROUND

In some scenarios, various multi-panel or multi-TRP (transmission reception point) transmission schemes are introduced. However, how to determine a transmission scheme for uplink information is a problem that needs to be solved.

### SUMMARY

In an embodiment of the present disclosure, there is provided a method for wireless communication, a terminal device and a network device. The terminal device can determine an uplink transmission scheme flexibly and improve a throughput of a system.

According to a first aspect, there is provided a method for wireless communication, which includes the following operations.

A terminal device receives first downlink control information (DCI).

The terminal device determines a transmission scheme for first uplink information according to at least one signaling in the first DCI. The transmission scheme for the first uplink information is one of: a space division multiplexing (SDM) transmission scheme, a single frequency network (SFN) transmission scheme, a time division multiplexing (TDM) transmission scheme, a frequency division multiplexing (FDM) transmission scheme, or a single transmission reception point (single-TRP) or single-panel transmission scheme.

The terminal device transmits the first uplink information according to the transmission scheme for the first uplink information.

According to a second aspect, there is provided a method for wireless communication, which includes the following operations.

A network device transmits a first DCI. At least one signaling in the first DCI is used by a terminal device to determine a transmission scheme for first uplink information, and the transmission scheme for the first uplink information is one of: an SDM transmission scheme, an SFN transmission scheme, a TDM transmission scheme, an FDM transmission scheme, or a single-TRP or single-panel transmission scheme.

The network device receives the first uplink information transmitted by the terminal device according to the transmission scheme for the first uplink information.

According to a third aspect, there is provided a method for wireless communication, which includes the following operations.

A terminal device receives sounding reference signal (SRS) resource indication information.

The terminal device determines a transmission scheme for first uplink information according to a number of transmission configuration indicator (TCI) states associated with an SRS resource indicated by the SRS resource indication information. The transmission scheme for the first uplink information is one of: a single-TRP or single-panel transmission scheme, or an SFN transmission scheme.

The terminal device transmits the first uplink information according to the transmission scheme for the first uplink information.

According to a fourth aspect, there is provided a method for wireless communication, which includes the following operations.

A network device transmits SRS resource indication information. A number of TCI states associated with an SRS resource indicated by the SRS resource indication information is used by a terminal device to determine a transmission scheme for the first uplink information, and the transmission scheme for the first uplink information is one of: a single-TRP or single-panel transmission scheme, or an SFN transmission scheme.

The network device receives the first uplink information transmitted by the terminal device according to the transmission scheme for the first uplink information.

According to a fifth aspect, there is provided a terminal device, which is configured to implement the above method in the above first aspect.

Specifically, the terminal device includes functional modules for implementing the above method in the first aspect.

According to a sixth aspect, there is provided a network device, which is configured to implement the above method in the second aspect.

Specifically, the network device includes functional modules for implementing the above method in the second aspect.

According to a seventh aspect, there is provided a terminal device, which is configured to implement the above method in the third aspect.

Specifically, the terminal device includes functional modules for implementing the above method in the third aspect.

According to an eighth aspect, there is provided a network device, which is configured to implement the above method in the fourth aspect.

Specifically, the network device includes functional modules for implementing the above method in the fourth aspect.

According to a ninth aspect, there is provided a terminal device, including a processor and a memory. The memory is configured to store a computer program, and the processor is configured to call and execute the computer program stored in the memory to cause the terminal device to perform the above method of the first aspect.

According to a tenth aspect, there is provided a network device, including a processor and a memory. The memory is configured to store a computer program, and the processor is configured to call and execute the computer program stored in the memory to cause the network device to perform the above method of the second aspect.

According to an eleventh aspect, there is provided a terminal device, including a processor and a memory. The memory is configured to store a computer program, and the processor is configured to call and execute the computer program stored in the memory to cause the terminal device to perform the above method of the third aspect.

According to a twelfth aspect, there is provided a network device, including a processor and a memory. The memory is configured to store a computer program, and the processor is configured to call and execute the computer program stored in the memory to cause the network device to perform the above method of the fourth aspect.

According to a thirteenth aspect, there is provided an apparatus, which is configured to implement the above method in any of the first aspect to fourth aspect.

Specifically, the apparatus includes a processor, which is configured to call and execute a computer program in a memory to cause a device equipped with the apparatus to implement the above method in any of the first aspect to fourth aspect.

According to a fourteenth aspect, there is provided a computer-readable storage medium, which is configured to store a computer program that causes a computer to implement the above method in any of the first aspect to fourth aspect.

According to a fifteenth aspect, there is provided a computer program product, including computer program instructions that cause a computer to implement the above method in any of the first aspect to fourth aspect.

According to a sixteenth aspect, there is provided a computer program that, when running on a computer, causes a computer to implement the above method in any of the first aspect to fourth aspect.

Through the technical solutions in the first and second aspects mentioned above, the terminal device may determine a transmission scheme for first uplink information according to at least one signaling in the first DCI, and the transmission scheme for the first uplink information is one of: an SDM transmission scheme, an SFN transmission scheme, a TDM transmission scheme, a FDM transmission scheme, or a single-TRP or single-panel transmission scheme. Accordingly, the terminal device can determine the uplink transmission scheme dynamically based on the first DCI, that is, the terminal device can determine the uplink transmission scheme flexibly, and the throughput of the system can be improved.

Through the technical solutions in the third and fourth aspects mentioned above, the terminal device may determine a transmission scheme for first uplink information according to a number of TCI states associated with an SRS resource indicated by the SRS resource indication information, and the transmission scheme for the first uplink information is one of: a single-TRP or single-panel transmission scheme, or an SFN transmission scheme. Accordingly, the terminal device can determine the uplink transmission scheme flexibly, and the throughput of the system can be improved.

### BRIEF DESCRIPTION OF THE DRAWINGS

FIG. 1 is a schematic diagram of a communication system architecture applied in an embodiment of the present disclosure.
FIG. 2 is a schematic diagram of simultaneous uplink transmission across multiple panels/TRPs according to the present disclosure.
FIG. 3 is a schematic flowchart of a method for wireless communication according to an embodiment of the present disclosure.
FIG. 4 is a schematic diagram of an SDM transmission scheme according to an embodiment of the present disclosure.
FIG. 5 is a schematic diagram of an FDM transmission scheme according to an embodiment of the present disclosure.
FIG. 6 is a schematic diagram of an SFN transmission scheme according to an embodiment of the present disclosure.
FIG. 7 is a schematic diagram of a TDM transmission scheme according to an embodiment of the present disclosure.
FIG. 8 is a schematic flowchart of another method for wireless communication according to an embodiment of the present disclosure.
FIG. 9 is a schematic block diagram of a terminal device according to an embodiment of the present disclosure.
FIG. 10 is a schematic block diagram of a network device according to an embodiment of the present disclosure.
FIG. 11 is a schematic block diagram of a terminal device according to an embodiment of the present disclosure.
FIG. 12 is a schematic block diagram of a network device according to an embodiment of the present disclosure.
FIG. 13 is a schematic block diagram of a communication device according to an embodiment of the present disclosure.
FIG. 14 is a schematic block diagram of an apparatus according to an embodiment of the present disclosure.
FIG. 15 is a schematic block diagram of a communication system according to an embodiment of the present disclosure.

### DETAILED DESCRIPTION

The technical solution of the embodiments of the present disclosure will be described below in conjunction with the drawings in the embodiments of the present disclosure, and it will be apparent that the described embodiments are part of the embodiments of the present disclosure, but not all of them. Based on the embodiments in the present disclosure, all other embodiments obtained by those skilled in the art without making creative efforts fall within the scope of protection of the present disclosure.

The technical solution of the embodiments of the present disclosure may be applied to various communication systems. For example, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), an internet of things (IoT), a wireless fidelity (WiFi), a 5th-generation (5G) communication system, a 6th-generation (6G) communication system or other communication systems.

Generally speaking, conventional communication systems support a limited number of connections and are easy to implement. However, with the development of communication technology, mobile communication systems will not only support a conventional communication, but also support, for example, a device to device (D2D) communication, a machine to machine (M2M) communication, a machine type communication (MTC), a vehicle to vehicle (V2V) communication, a sidelink (SL) communication, a vehicle to everything (V2X), etc. Embodiments of the present disclosure may also be applied to these communication systems.

In some embodiments, the communication system in the embodiments of the present disclosure may be applied to a carrier aggregation (CA) scenario, a dual connectivity (DC) scenario, and a standalone (SA) network distribution scenario or a non-standalone (NSA) network distribution scenario.

In some embodiments, the communication system in the embodiments of the present disclosure may be applied to an unlicensed spectrum, where the unlicensed spectrum may also be considered a shared spectrum. Alternatively, the communication system in the embodiments of the present disclosure may also be applied to a licensed spectrum, where the licensed spectrum may also be considered as a non-shared spectrum.

In some embodiments, the communication system in the embodiments of the present disclosure may be applied to a FR1 band (corresponding to a band range of 410 MHz to 7.125 GHz), to a FR2 band (corresponding to a band range of 24.25 GHz to 52.6 GHz), and to new bands such as higher bands corresponding to a band range of 52.6 GHz to 71 GHz or a band range of 71 GHz to 114.25 GHz.

Embodiments of the present disclosure are described in connection with a network device and a terminal device. The terminal device may be referred to as user equipment (UE), an access terminal, a subscriber unit, a subscriber station, a mobile station, a mobile platform, a remote station, a remote terminal, a mobile device, a user terminal, a terminal, a wireless communication device, a user agent, or a user device.

The terminal device may be a STATION (ST) in the WLAN, it may be a cellular phone, a cordless phone, a session initiation protocol (SIP) telephone, a wireless local loop (WLL) station, a personal digital assistant (PDA) device, a handheld device with wireless communication function, a computing device or other processing device connected to a wireless modem, an in-vehicle device, a wearable device, a next-generation communication system such as a terminal device in an NR network, or a terminal device in a future evolved public land mobile network (PLMN) network, etc.

In embodiments of the present disclosure, the terminal device may be deployed on land, including indoor or outdoor, hand-held, wearable or in-vehicle. The terminal device may also be deployed on the water (such as ships, etc.). The terminal device may also be deployed on the air (such as airplanes, balloons and satellites, etc.).

In the embodiments of the present disclosure, the terminal device may be a mobile phone, a pad, a computer with wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or smart home, a vehicle communication device, a wireless communication chip/application specific integrated circuit (ASIC)/System on Chip (SoC) etc.

By way of example and not limitation, in the embodiments of the present disclosure, the terminal device may also be a wearable device. The wearable device may also be called a wearable intelligent device, which is the general name of wearable devices developed by applying wearable technology to intelligently design daily wear, such as glasses, gloves, watches, clothing and shoes. The wearable device is a portable device that is worn directly on the body or integrated into the user's clothes or accessories. The wearable device is not only a kind of hardware device, but also realizes powerful functions through software support, data interaction and cloud interaction. Generalized wearable smart devices include full functions and large size, which may realize complete or partial functions without relying on smart phones, such as smart watches or smart glasses, and only focus on certain application functions, and the wearable smart devices need to be used in conjunction with other devices such as smart phones, such as various smart bracelets and smart jewelry for monitoring physical signs.

In embodiments of the present disclosure, the network device may be a device for communicating with a mobile device, and the network device may be an access point (AP) in WLAN, a base transceiver station (BTS) in GSM or CDMA, a base station (NodeB, NB) in WCDMA, an evolutional node B (eNB or eNodeB) in LTE, a relay station or an access point, or an in-vehicle device, a wearable device, a network device or a base station (gNB) or a Transmission Reception Point (TRP) in the NR network, a network device in future evolved PLMN network or a network device in the NTN network, etc.

By way of example and not limitation, in embodiments of the present disclosure, the network device may have mobility characteristics, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. In some embodiments, the network device may also be a base station arranged on land, water and the like.

In the embodiments of the present disclosure, the network device may provide services for a cell, the terminal device communicates with the network device through transmission resources (e.g. frequency domain resources, or spectrum resources) used by the cell, the cell may be a cell corresponding to a network device (e.g. a base station), the cell may belong to a macro base station or a base station corresponding to a small cell. The small cell may include a metro cell, a micro cell, a pico cell, a femto cell, etc. These small cells have the characteristics of small coverage and low transmit power, and are suitable for providing high-speed data transmission services.

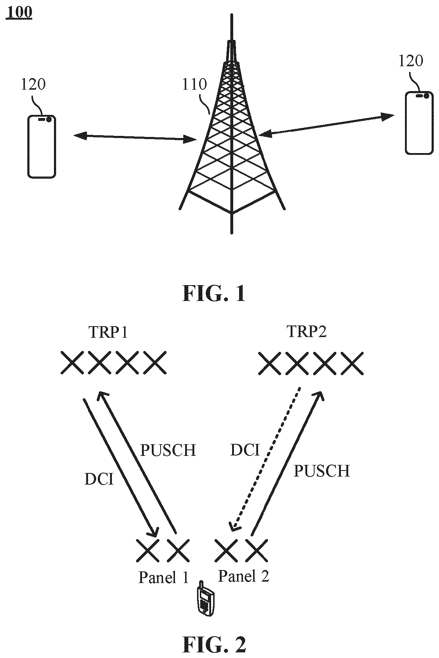

Exemplarily, a communication system 100 applied in the embodiments of the present disclosure is illustrated in FIG. 1. The communication system 100 may include a network device 110, which may be a device that communicates with terminal devices 120 (or referred to as a communication terminal or a terminal). The network device 110 may provide communication coverage for a particular geographic area and may communicate with terminal devices located within the coverage area.

FIG. 1 exemplarily illustrates one network device and two terminal devices. In some embodiments, the communication system 100 may include multiple network devices and other numbers of terminal devices may be included within the coverage of each network device, which is not limited by embodiments of the present disclosure.

In some embodiments, the communication system 100 may also include other network entities such as network controllers, mobility management entities and the like, which are not limited by the embodiments of the present disclosure.

It is to be understood that a device having a communication function in a network/system in the embodiments of the present disclosure may be referred to as a communication device. Taking the communication system 100 illustrated in FIG. 1 as an example, the communication device may include a network device 110 and a terminal device 120 having a communication function, the network device 110 and the terminal device 120 may be specific devices described above and will not be described here. The communication device may also include other devices in the communication system 100 such as network controllers, mobility management entities and other network entities, which are not limited in embodiments of the present disclosure.

It is to be understood that the terms "system" and "network" of the present disclosure are often used interchangeably herein. In the present disclosure, the term "and/or" is used to describe an association relationship of associated objects, and represents that there may be three relationships. For example, A and/or B may represent the following three situations: i.e., independent existence of A, existence of both A and B and independent existence of B. In addition, the character "/" in the present disclosure generally represents that an "or" relationship is formed between the previous and next associated objects.

It is to be understood that the present disclosure relates to a first communication device and a second communication device, and the first communication device may be a terminal device, such as a mobile phone, a machine facility, a Customer Front End device (CPE), an industrial device, a vehicle, and the like. The second communication device may be an opposite communication device of the first communication device, such as a network device, a mobile phone, an industrial device, a vehicle, etc. In the embodiments of the present disclosure, the first communication device may be a terminal device, and the second communication device may be a network device (i.e., uplink communication or downlink communication). Alternatively, the first communication device may be a first terminal, and the second communication device may be a second terminal (i.e., sidelink communication).

Terms used in the embodiments of the present disclosure are used only for explanation of specific embodiments of the present disclosure and are not intended to be limiting. Terms "first", "second", "third", "fourth", etc. in the description and claims of the present disclosure and the above drawings are used to distinguish different objects, and are not used to describe a particular order. Furthermore, the terms "including" and "having" and any variations thereof are intended to cover non-exclusive inclusion.

It is to be understood that the reference to "indicate" in embodiments of the present disclosure may be a direct indication, may be an indirect indication, or may indicate an association relationship. For example, A indicates B, which may mean that A directly indicates B, for example, B may be obtained through A. It may also mean that A indirectly indicates B, for example, A indicates C, and B may be obtained by C. It may also indicate that there is an association relationship between A and B.

In the description of embodiments of the present disclosure, the term "correspond" may mean that there is a direct correspondence or an indirect correspondence relationship between the two, may also mean that there is an association relationship between the two, may also be a relationship between indication and being indicated, configuration and being configured, etc.

In embodiments of the present disclosure, the "predefined" or "pre-configured" may be implemented by pre-storing corresponding codes, tables, or other manners that may be used to indicate relevant information in devices (e.g., including terminal devices and network devices), the specific implementation of which is not limited by the present disclosure. For example, predefined may refer to what is defined in the protocol.

In the embodiments of the present disclosure, the "protocol" may refer to a standard protocol in the field of communication, and may be an evolution of a protocol related to an LTE protocol, an NR protocol, a Wi-Fi protocol, or other communication systems related thereto, for example, and a protocol type is not limited in the present disclosure.

In order to facilitate understanding of the technical solution of the embodiments of the present disclosure, the technical solution of the present disclosure will be described in detail by specific embodiments below. The following related technologies may be combined with the technical solution of the embodiments of the present disclosure arbitrarily as an optional solution, all of which belong to the protection scope of the embodiments of the present disclosure. Embodiments of the present disclosure include at least some of the following.

In order to better understand the embodiments of the present disclosure, a configuration method of transmission scheme related to the present disclosure is explained.

### Switching between PDSCH Transmission Schemes in a multi-TRP Scenario

Channel propagation characteristics between multiple transmission points and users are independent relatively, and repeated transmissions for multiple TRPs in the spatial domain, the time domain and the frequency domain can improve the reliability of data transmission and reduce the transmission delay. For an ideal backhaul scenario, physical downlink shared channel (PDSCH) transmissions for multiple TRPs are scheduled by single downlink control information (DCI), and multiple PDSCH transmissions may be performed using frequency division multiplexing (FDM), spatial division multiplexing (SDM), time division multiplexing (TDM) or the like. Through different transmission schemes, the base station transmits the PDSCH to the UE using two transmission configuration indicator (TCI) states.

A method for switching between different transmission schemes is as follows:
a. DCI indicates two TCI states, and the transmission scheme is configured by a radio resource control (RRC) signaling as any one of: FDM scheme A, FDM scheme B, TDM scheme A;
b. The DCI indicates two TCI states, and the number of repetitions is configured by a repetition number (i.e., repetitionNumber) field in the RRC signaling, and the transmission scheme is TDM scheme B;
c. Dynamic switching: the base station may indicate one TCI state through the DCI to dynamically switch to a non-repeated transmission scheme. Alternatively, if the DCI indicates two TCI states, and the DCI indicates through an antenna ports field that demodulation reference signal (DMRS) ports are in two code division multiplexing (CDM) groups, the transmission scheme is a space division multiplexing (SDM) scheme;
d. If the base station configures the RRC parameter 'repetitionNumber' for the PDSCH, the UE does not expect to be configured with an RRC parameter 'repeated transmission scheme' (i.e., repetitionScheme);
e. If the base station configures the RRC parameter 'repetitionNumber' for the PDSCH, or if the base station configures repetitionScheme for the PDSCH as: 'FDM transmission scheme A (i.e., fdmSchemeA)' or 'FDM transmission scheme B (i.e., fdmSchemeB)' or 'TDM transmission scheme A (i.e., tdmSchemeA)', the UE does not expect to be configured with a PDSCH aggregation factor (i.e., pdsch-AggregationFactor).

From the above limitations of d and e, it can be understood that the FDM transmission scheme and the TDM transmission scheme may only be configured separately.

### A method for configuring a PUSCH transmission scheme in a multi-TRP Scenario

In the release 17 (Rel-17), it is only supported to transmit multiple physical uplink shared channels (PUSCHs) to two TRPs in a TDM manner, which includes a PUSCH repetition type A and a PUSCH repetition type B. The configuration method is: either one of the two schemes is configured by the RRC signaling.

Each repetition of PUSCH repetition type A or PUSCH repetition type B may be sent to the same TRP (i.e., single-TRP transmission) or to two TRPs (i.e., multi-TRP transmission). The single-TRP transmission and the multi-TRP transmission are indicated by a sounding reference signal (SRS) resource set indicator field in a DCI format 0-1 and a DCI format 0-2.

In order to better understand the embodiments of the present disclosure, the uplink multi-panel/TRP transmission related to the present disclosure is explained as follows.

If the terminal is configured with multiple panels and supports simultaneous transmission of uplink information on the multiple panels, the terminal may transmit multiple pieces of uplink information on the multiple panels simultaneously, as described in FIG. 2, so as to improve the uplink spectrum efficiency. Similarly, the uplink multi-panel/TRP transmission may be scheduled by a single piece of DCI or scheduled by multiple pieces of DCIs.

In order to better understand the embodiments of the present disclosure, problems solved in the present disclosure are explained as follows.

For single-DCI scheduled multi-panel/TRP PUSCH transmission, the release 18 (Rel-18) introduces an SDM scheme and a single frequency network (SFN) scheme, and the Rel-17 introduces a PUSCH repetition type A and a PUSCH repetition type B. In the release 16 (Rel-16), flexible switching between the above schemes cannot be supported in the switching of PDSCH transmission schemes in the multi-TRP scenario. Moreover, in the Rel-17, only the dynamic switching between a single-TRP transmission and a multi-TRP transmission is defined, and there is no dynamic switching between multi-TRP transmission schemes.

Throughput simulation results of the SDM scheme and a comparison scheme (i.e., single-panel transmission scheme, that is, non-multi-panel simultaneous transmission) may be illustrated in Table 1, and throughput simulation results of the SFN scheme and a comparison scheme (i.e., single-panel transmission scheme, that is, non-multi-panel simultaneous transmission) may be illustrated in Table 2. It can be seen from Table 1 that when the UE is at an edge of a cell, the SDM scheme results in performance degradation for edge users (i.e., -3.1%). It can be seen from Table 2 that when the UE is at the edge of the cell, the SFN scheme can bring a better edge user gain (i.e., low resource occupancy rate +11.0%, and high resource occupancy rate +86.7%). For Table 1 and Table 2, according to the comparison of the SDM scheme with the SFN scheme, the SDM scheme is able to provide a higher average gain, while SFN is able to provide a higher edge user gain, and both SDM and SFN schemes perform better than the single-panel scheme. Therefore, in order to maximize the system throughput, the present disclosure designs a method for dynamically indicating a transmission scheme such as the SDM transmission scheme and the SFN transmission scheme to improve the system throughput.

**Table 1 Performance of SDM scheme compared to single-panel scheme**

| Resource occupancy rate | Scheme | Average Gain | Edge User Gain | 50% User Gain | 95% User Gain |
|---|---|---|---|---|---|
| Low | single panel | 357.076 | 226.520 | 331.152 | 592.305 |
| Low | SDM | 438.678 (+22.7%) | 219.311 (-3.1%) | 398.381 (+20.2%) | 802.959 (+35.5%) |

**Table 2 Performance of SFN scheme compared to single-panel scheme**

| Resource occupancy rate | Scheme | Average Gain | Edge User Gain | 50% User Gain | 95% User Gain |
|---|---|---|---|---|---|
| Low | Single panel | 357.076 | 226.520 | 331.152 | 592.305 |
| Low | SFN | 394.688 (+10.3%) | 251.525 (+11.0%) | 368.845 (+11.1%) | 623.833 (+5.2%) |
| High | Single panel | 198.498 | 45.834 | 176.642 | 430.531 |
| High | SFN | 237.001 (+19.7%) | 84.331 (+86.7%) | 209.151 (+18.8%) | 452.207 (+5.1%) |

It is to be understood that in the embodiments of the present disclosure, the panel is a logical entity used for transmission by the terminal device, and transmission beams of antennas in different panels can be adjusted independently.

The technical solutions of the present disclosure will be described in detail by specific embodiments below.

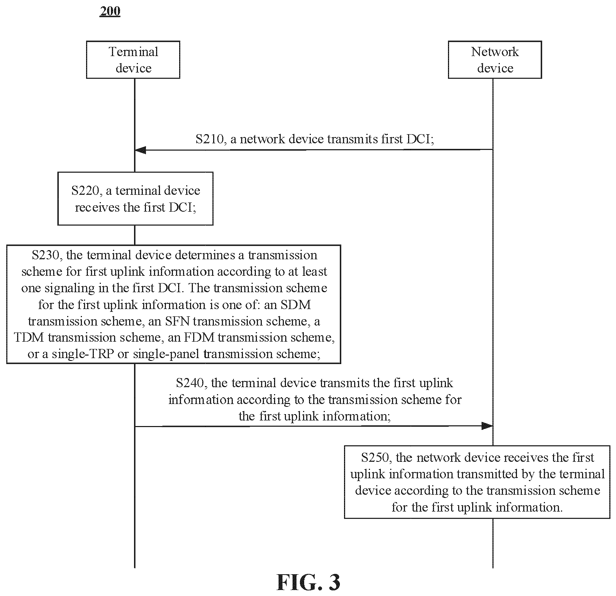

FIG. 3 is a schematic flowchart of a method 200 for wireless communication according to an embodiment of the present disclosure. As illustrated in FIG. 3, the method 200 for wireless communication may include at least some of the following operations.

At S210, a network device transmits first DCI.

At S220, a terminal device receives the first DCI.

At S230, the terminal device determines a transmission scheme for first uplink information according to at least one signaling in the first DCI. The transmission scheme for the first uplink information is one of: a space division multiplexing (SDM) transmission scheme, a single frequency network (SFN) transmission scheme, a time division multiplexing (TDM) transmission scheme, a frequency division multiplexing (FDM) transmission scheme, or a single transmission reception point (single-TRP) or single-panel transmission scheme.

At S240, the terminal device transmits the first uplink information according to the transmission scheme for the first uplink information.

At S250, the network device receives the first uplink information transmitted by the terminal device according to the transmission scheme for the first uplink information.

In the embodiment, the terminal device may determine the transmission scheme for first uplink information according to at least one signaling in the first DCI, and the transmission scheme for the first uplink information is one of: the SDM transmission scheme, the SFN transmission scheme, the TDM transmission scheme, the FDM transmission scheme, or the single-TRP or single-panel transmission scheme. Accordingly, the network device can indicate the uplink transmission scheme dynamically based on the first DCI, that is, the terminal device can determine the uplink transmission scheme flexibly. Moreover, since the transmission scheme for the first uplink information may be a multi-TRP or multi-panel transmission scheme such as SDM or SFN, the throughput of the system can be improved.

In some embodiments, a signaling in the at least one signaling may be an information field in the first DCI.

In some embodiments, a format of the first DCI may be one of: DCI format 0_1, DCI format 0_2, DCI format 1_1, or DCI format 1_2.

In some embodiments, the first uplink information includes, but is not limited to, at least one of: a Physical Uplink Control Channel (PUCCH), or a Physical Uplink Shared Channel (PUSCH).

In some embodiments, the SDM transmission scheme includes an SDM transmission scheme A and an SDM transmission scheme B.

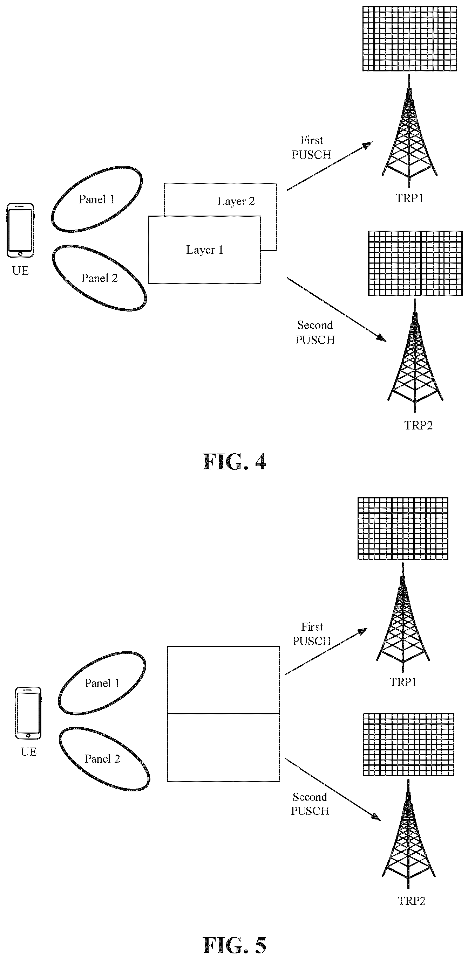

In the SDM transmission scheme A, different transmission layers of the first uplink information are respectively associated with different spatial parameters, for example, a part of the transmission layers of the first uplink information is associated with a first spatial parameter, and another part of the transmission layers of the first uplink information is associated with a second spatial parameter. Specifically, as illustrated in FIG. 4, in the SDM transmission scheme A, taking the first uplink information being the PUSCH and the spatial parameter being the TCI state as an example, different transmission layers of one PUSCH may be transmitted to different TRPs through different panels of the terminal device, for example, different transmission layers transmitted to different TRPs through different panels may be considered to be different PUSCHs. For example, a part of transmission layers of the PUSCH transmitted through panel 1 is associated with a first TCI state, and is denoted as a first PUSCH. Another part of the transmission layers of the PUSCH transmitted by the panel 2 is associated with a second TCI state, and is denoted as a second PUSCH. It can be understood that the first PUSCH and the second PUSCH are different transmission layers of a same transmission block (TB).

In the SDM transmission scheme B, repeated transmissions of the first uplink information (which may be different Redundancy Versions (RVs)) are respectively associated with different spatial parameters, for example, one repeated transmission of the first uplink information is associated with the first spatial parameter, and another repeated transmission of the first uplink information is associated with the second spatial parameter. Specifically, as illustrated in FIG. 4, in the SDM transmission scheme B, taking the first uplink information being the PUSCH and the spatial parameter being the TCI state as an example, the repeated transmissions of one PUSCH may be transmitted to different TRPs through different panels of the terminal device. For example, a PUSCH transmitted by panel 1 of the terminal device is associated with the first TCI state and is denoted as the first PUSCH. A PUSCH transmitted by the panel 2 of the UE is associated with the second TCI state, and is denoted as the second PUSCH. It can be understood that the first PUSCH and the second PUSCH are repeated transmissions of the same TB.

In some embodiments, the FDM transmission scheme includes an FDM transmission scheme A and an FDM transmission scheme B.

In the FDM transmission scheme A, repeated transmissions of the first uplink information (which may be different RVs or the same RV) are respectively associated with different spatial parameters, for example, one repeated transmission of the first uplink information is associated with the first spatial parameter, and another repeated transmission of the first uplink information is associated with the second spatial parameter. Specifically, as illustrated in FIG. 5, in the FDM transmission scheme A, taking the first uplink information being the PUSCH and the spatial parameter being the TCI state as an example, the repeated transmissions of one PUSCH may be transmitted to different TRPs through different panels of the terminal device. For example, a PUSCH transmitted by panel 1 of the terminal device is associated with the first TCI state and is denoted as the first PUSCH. A PUSCH transmitted by the panel 2 of the terminal device is associated with the second TCI state, and is denoted as the second PUSCH. The first PUSCH and the second PUSCH correspond to two PUSCH transmission occasions respectively. Two PUSCH transmission occasions of the first PUSCH and the second PUSCH are associated with non-overlapping frequency domain resources, respectively.

In the FDM transmission scheme B, different information bits of the first uplink information are respectively associated with different spatial parameters, for example, a part of the information bits of the first uplink information is associated with the first spatial parameter, and another part of the information bits of the first uplink information is associated with the second spatial parameter. Specifically, as illustrated in FIG. 5, in the FDM transmission scheme B, taking the first uplink information being the PUSCH and the spatial parameter being the TCI state as an example, different parts of one PUSCH (for example, different information bits) are transmitted to different TRPs through different panels of the terminal device. For example, an information bit of the PUSCH transmitted by panel 1 of the terminal device is associated with the first TCI state and is denoted as the first PUSCH. An information bit of the PUSCH transmitted by the panel 2 of the terminal device is associated with the second TCI state, and is denoted as the second PUSCH. The first PUSCH and the second PUSCH correspond to the same PUSCH transmission occasion, respectively. The first PUSCH and the second PUSCH are associated with non-overlapping frequency domain resources, respectively.

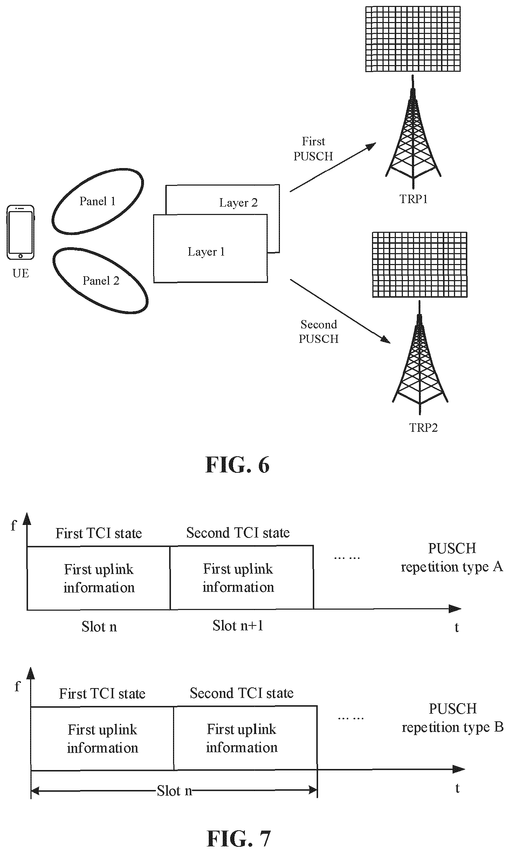

In some embodiments, in the SFN transmission scheme, repeated transmissions of the first uplink information are respectively associated with different spatial parameters, for example, one repeated transmission of the first uplink information is associated with the first spatial parameter, and another repeated transmission of the first uplink information is associated with the second spatial parameter. Specifically, taking the first uplink information being the PUSCH and the spatial parameter being the TCI state as an example, as illustrated in FIG. 6, the repeated transmissions of one PUSCH may be transmitted to different TRPs through different panels of the terminal device. For example, a PUSCH transmitted by panel 1 of the terminal device is associated with the first TCI state and is denoted as the first PUSCH. A PUSCH transmitted by the panel 2 of the terminal device is associated with the second TCI state, and is denoted as the second PUSCH.

In some embodiments, the TDM transmission scheme includes a TDM transmission scheme (repetition type A) and a TDM transmission scheme (repetition type B).

In the TDM transmission scheme (repetition type A), multiple repeated transmissions of the first uplink information are transmitted in multiple slots, and a part of the multiple repeated transmissions of the first uplink information is associated with a first spatial parameter, and another part of the multiple repeated transmissions is associated with a second spatial parameter. Specifically, as illustrated in FIG. 7, taking the first uplink information being the PUSCH and the spatial parameter being the TCI state as an example, a part of the multiple repeated transmissions of one PUSCH is associated with a first TCI state, and the another part of the multiple repeated transmissions is associated with a second TCI state.

In the TDM transmission scheme (repetition type B), multiple repeated transmissions of the first uplink information are transmitted in multiple transmission occasions, and a part of the multiple repeated transmissions is associated with a first spatial parameter, and another part of the multiple repeated transmissions is associated with a second spatial parameter. Specifically, as illustrated in FIG. 7, taking the first uplink information being the PUSCH and the spatial parameter being the TCI state as an example, a part of the multiple repeated transmissions of one PUSCH is associated with a first TCI state, and the another part of the multiple repeated transmissions is associated with a second TCI state.

It is to be noted that in the embodiments of the present disclosure, the SDM transmission scheme may be the above-described SDM transmission scheme A or SDM transmission scheme B, the FDM transmission scheme may be the above-described FDM transmission scheme A or FDM transmission scheme B, and the TDM transmission scheme may be the above-described TDM transmission scheme (repetition type A) or TDM transmission scheme (repetition type B).

It is to be understood that the spatial parameter in the embodiments of the present disclosure may refer to a spatial setting, a spatial relationship or the like for transmission of the first uplink information.

In some embodiments of the present disclosure, the spatial parameters include, but are not limited to, at least one of:
panel information, TRP information, Control Resource Set (CORESET) group information, TCI state information, reference signal set information, reference signal information, beam information, or capability set information.

In some embodiments, the panel information may include an panel Identity (ID) or index.

In some embodiments, the TRP information may include a TRP ID or index.

In some embodiments, the CORESET group information may include an ID or index of a CORESET group.

In some embodiments, the TCI state information may include a unified TCI state, or an uplink TCI state, or a joint TCI state.

In some embodiments, the reference signal set information may be Synchronization Signal Block (SSB) resource set information or Channel State Information Reference Signal (CSI-RS) resource set information or SRS resource set information.

For example, the reference signal set information may include an index of a reference signal set, such as an index of an SSB set, an index of a CSI-RS resource, or an index of an SRS resource.

In some embodiments, the reference signal information may include SSB resource information, CSI-RS resource information, or SRS resource information. For example, the reference signal information may be an index of an SRS resource, an SSB resource, or a CSI-RS resource.

In some embodiments, the beam information may include a beam ID or beam index.

In an embodiment of the present disclosure, the beam may also be referred to as a spatial domain transmission filter (or spatial domain filter for transmission), or a spatial domain reception filter (or spatial domain filter for reception) or a Spatial Rx parameter.

In some embodiments, the capability set information may include one or more parameters. For example, the capability set information may be a set of capabilities supported by the terminal device or reference signal information associated with the set of capabilities supported by the terminal device.

In some embodiments, the capability set information includes, but is not limited to, at least one of the following:
a maximum number of SRS ports, a maximum number of uplink transmission layers, a codebook subset type, an uplink full power transmission mode, an SRS antenna switching capability, an SRS carrier switching capability, the number of SRS resources sent simultaneously, a maximum modulation scheme of uplink data transmission, a maximum modulation scheme of downlink data transmission, a number Hybrid Automatic Repeat Request (HARQ) processes supported by the terminal device, a channel bandwidth supported by the terminal device, a number of transmission antennas supported by the terminal device, a Physical Downlink Shared Channel (PDSCH) processing capability, a PUSCH processing capability, a power saving capability of the terminal device, a coverage enhancement capability of the terminal device, a data transmission rate improvement capability of the terminal device, a short-latency processing capability of the terminal device, a small data transmission capability of the terminal device, an inactive data transmission capability of the terminal device, a transmission reliability capability of the terminal device, a Ultra-Reliable and Low Latency Communication (URLLC) data transmission capability of the terminal device.

In some embodiments, the at least one signaling includes a first signaling and/or a second signaling. The first signaling is for determining one of the following transmission schemes: the TDM transmission scheme, the FDM transmission scheme, the SDM transmission scheme, or the SFN transmission scheme, and the second signaling is for determining TRP information or panel information.

That is, the terminal device may determine a transmission scheme for the first uplink information based on the first signaling and/or the second signaling.

In some embodiments, the first signaling may be a newly added field in the first DCI.

In some embodiments, some bit states in the second signaling are used to indicate the terminal device to transmit the first uplink information using a single TRP/single panel, and some bit states in the second signaling are used to indicate the terminal device to transmit the first uplink information using multiple TRPs/multiple panels.

In some embodiments, the second signaling is an SRS resource set indicator field, or the second signaling is an indicator field associated with a TCI. For example, the second signaling is the SRS resource set indicator field, the SRS resource set indicator field occupies 2 bits, a bit state of the SRS resource set indicator field is 00 or 01 for indicating that the first uplink information is transmitted using a single TRP or single antenna panel, and the bit state of the SRS resource set indicator field is 10 or 11 for indicating that the first uplink information is transmitted using multiple TRPs or multiple panels.

Specifically, the second signaling is an indicator field associated with the TCI, that is, if an indicator field associated with the unified TCI indicates two TCI states, the terminal device may further determine the transmission scheme through the first signaling.

In some embodiments, in a case where a bit state of the second signaling is for indicating that a single TRP or a single panel is used to transmit the first uplink information, the first signaling occupies 0 bit, or the at least one signaling does not include the first signaling.

That is, in the case where the bit state of the second signaling is for indicating that the single TRP or the single panel is used to transmit the first uplink information, the transmission scheme for the first uplink information is a single-TRP or single-panel transmission scheme.

It is to be noted that transmitting the first uplink information by the terminal device using the single TRP/single panel can be understood as that the terminal device transmits the first uplink information using one spatial parameter, or the first uplink information is associated with one spatial parameter.

In some embodiments, in a case where the bit state of the second signaling is for indicating that multiple TRPs or multiple panels are used to transmit the first uplink information, the first signaling occupies at least one bit, and different bit states of the first signaling are for respectively indicating at least two of the TDM transmission scheme, the FDM transmission scheme, the SDM transmission scheme, or the SFN transmission scheme.

That is, in the case where the bit state of the second signaling is for indicating that multiple TRPs or multiple panels are used to transmit the first uplink information, the transmission scheme for the first uplink information may be further determined based on the first signaling.

It is to be noted that transmitting the first uplink information by the terminal device using multiple TRPs/multiple panels can be understood as that the terminal device transmits the first uplink information using multiple spatial parameters, or the first uplink information is associated with multiple spatial parameters.

In some embodiments, in a case where the first signaling occupies one bit, one bit state of the first signaling is for indicating the SDM transmission scheme, and another bit state of the first signaling is for indicating the SFN transmission scheme.

For example, the bit state of the first signaling is 0 to indicate the SDM transmission scheme, and the bit state of the first signaling is 1 to indicate the SFN transmission scheme. For another example, the bit state of the first signaling is 1 to indicate the SDM transmission scheme, and the bit state of the first signaling is 0 to indicate the SFN transmission scheme.

In some embodiments, in a case where the first signaling occupies two bits, different bit states of the first signaling are for respectively indicating at least three of the TDM transmission scheme, the FDM transmission scheme, the SDM transmission scheme, or the SFN transmission scheme.

For example, the bit state of the first signaling is 00 to indicate the SDM transmission scheme, the bit state of the first signaling is 01 to indicate the SFN transmission scheme, the bit state of the first signaling is 10 to indicate the TDM transmission scheme, and the bit state of the first signaling is 11 to indicate the FDM transmission scheme. It is to be noted that the transmission scheme indicated by each bit state of the first signaling can be adjusted flexibly, which is not limited in the present example.

For example, the bit state of the first signaling is 00 to indicate the SDM transmission scheme, the bit state of the first signaling is 01 to indicate the SFN transmission scheme, the bit state of the first signaling is 10 to indicate the TDM transmission scheme, and the bit state 11 of the first signaling is reserved.

For example, the bit state of the first signaling is 00 to indicate the SDM transmission scheme, the bit state of the first signaling is 01 to indicate the SFN transmission scheme, the bit state of the first signaling is 10 to indicate the FDM transmission scheme, and the bit state 11 of the first signaling is reserved.

In some embodiments, the first signaling may occupy more bits, which is not limited in the embodiments of the present disclosure.

In some embodiments, the first signaling is associated with an antenna port signaling.

In some embodiments, in a case where a bit state of the second signaling is for indicating that multiple TRPs or multiple panels are used to transmit the first uplink information, and a bit state of the first signaling is for indicating the SDM transmission scheme, the antenna port signaling indicates that demodulation reference signal (DMRS) ports of different code division multiplexing (CDM) groups are used to transmit the first uplink information.

In some embodiments, in a case where the bit state of the second signaling is for indicating that multiple TRPs or multiple panels are used to transmit the first uplink information, and the bit state of the first signaling is for indicating the SFN transmission scheme, the antenna port signaling indicates that a same DMRS port is used to transmit the first uplink information.

In some embodiments, in a case where the bit state of the second signaling is for indicating that multiple TRPs or multiple panels are used to transmit the first uplink information, and the first signaling indicates the SDM transmission scheme or the SFN transmission scheme, the bit states of the second signaling are exemplified as follows.

Multiple TRPs or multiple panels transmit the first uplink information, part or all of a first SRS resource indicator field, a first precoding and a first number of transmission layers are associated with the first spatial parameter, and part or all of a second SRS resource indicator field, a second precoding and a second number of transmission layers are associated with the second spatial parameter;

Multiple TRPs or multiple panels transmit the first uplink information, part or all of a first SRS resource indicator field, a first precoding and a first number of transmission layers are associated with the second spatial parameter, and part or all of a second SRS resource indicator field, a second precoding and a second number of transmission layers are associated with the first spatial parameter.

Specifically, for example, the bit states of the second signaling may be illustrated in Table 3 below.

**Table 3**

| Bit state | Second signaling |
|---|---|
| 00 | a single TRP or single antenna panel transmits the first uplink information: |
| | part or all of a first SRS resource indicator field, a first precoding and a first number of transmission layers are associated with the first spatial parameter. |
| 01 | a single TRP or single antenna panel transmits the first uplink information: |
| | part or all of a first SRS resource indicator field, a first precoding and a first number of transmission layers are associated with the second spatial parameter. |
| 10 | multiple TRPs or multiple panels transmit the first uplink information: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 11 | multiple TRPs or multiple panels transmit the first uplink information: |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |

It is to be understood that the bit states in the above second signaling and indicated contents may not be limited to the above-described example, and the bit states and the indicated contents may be adjusted flexibly, which is not limited in the embodiments of the present disclosure.

In some embodiments, the at least one signaling includes a third signaling, the third signaling being at least for determining one of following transmission schemes: the single-TRP or single-panel transmission scheme, the TDM transmission scheme, the FDM transmission scheme, the SDM transmission scheme, or the SFN transmission scheme.

In some embodiments, a bit state of the third signaling includes at least one of: a first bit state, a second bit state, a third bit state, or a fourth bit state.

The first bit state is for indicating a first SDM transmission scheme, the second bit state is for indicating a second SDM transmission scheme, the third bit state is for indicating a first SFN transmission scheme, and the fourth bit state is for indicating a second SFN transmission scheme.

Optionally, the first SDM transmission scheme may be the above-described SDM transmission scheme A, and the second SDM transmission scheme may be the above-described SDM transmission scheme B. Alternatively, the first SDM transmission scheme may be the above-described SDM transmission scheme B, and the second SDM transmission scheme may be the above-described SDM transmission scheme A.

In some embodiments, part or all of a first SRS resource indicator field, a first precoding and a first number of transmission layers in the first SDM transmission scheme are associated with a first spatial parameter, and part or all of a second SRS resource indicator field, a second precoding and a second number of transmission layers in the first SDM transmission scheme are associated with a second spatial parameter.

In some embodiments, part or all of a second SRS resource indicator field, a second precoding and a second number of transmission layers in the second SDM transmission scheme are associated with the first spatial parameter, and part or all of a first SRS resource indicator field, a first precoding and a first number of transmission layers in the second SDM transmission scheme are associated with the second spatial parameter.

In some embodiments, part or all of a first SRS resource indicator field and a first precoding in the first SFN transmission scheme are associated with the first spatial parameter, and part or all of a second SRS resource indicator field and a second precoding in the first SFN transmission scheme are associated with the second spatial parameter.

In some embodiments, part or all of a second SRS resource indicator field and a second precoding in the second SFN transmission scheme are associated with the first spatial parameter, and part or all of a first SRS resource indicator field and a first precoding in the second SFN transmission scheme are associated with the second spatial parameter.

In some embodiments, the third signaling occupies at least 3 bits. In some embodiments, the third signaling is an SRS resource set indicator field, or the third signaling is an indicator field associated with a TCI.

In some embodiments, the third signaling is an SRS resource set indicator field, and the SRS resource set indicator field is expanded from original 2 bits to 3 bits. Contents corresponding to bit states of the SRS resource set indicator field exemplified as follows.

One bit state of the SRS resource set indicator field is used to indicate a single panel/TRP transmission scheme. For example, the first spatial parameter is associated with the first uplink information, that is, the first spatial parameter is associated with one or more repeated transmissions of the first uplink information. This example can also be understood as: part or all of a first SRS resource indicator field, a first precoding and a first number of transmission layers of the first uplink information are associated with the first spatial parameter.

One bit state of the SRS resource set indicator field is used to indicate a single panel/TRP transmission scheme. For example, the second spatial parameter is associated with the first uplink information, that is, the second spatial parameter is associated with one or more repeated transmissions of the first uplink information. This example can also be understood as: part or all of a first SRS resource indicator field, a first precoding and a first number of transmission layers of the first uplink information are associated with the second spatial parameter.

One bit state of the SRS resource set indicator field is used to indicate a TDM transmission scheme. Specifically, for example, in the TDM transmission scheme, part or all of a first SRS resource indicator field, a first precoding and a first number of transmission layers are associated with the first spatial parameter, and part or all of a second SRS resource indicator field, a second precoding and a second number of transmission layers are associated with the second spatial parameter.

One bit state of the SRS resource set indicator field is used to indicate a TDM transmission scheme. Specifically, for example, in the TDM transmission scheme, part or all of a second SRS resource indicator field, a second precoding and a second number of transmission layers are associated with the first spatial parameter, and part or all of a first SRS resource indicator field, a first precoding and a first number of transmission layers are associated with the second spatial parameter.

One bit state of the SRS resource set indicator field is used to indicate an SDM transmission scheme. Specifically, for example, in the SDM transmission scheme, part or all of a first SRS resource indicator field, a first precoding and a first number of transmission layers are associated with the first spatial parameter, and part or all of a second SRS resource indicator field, a second precoding and a second number of transmission layers are associated with the second spatial parameter.

One bit state of the SRS resource set indicator field is used to indicate an SDM transmission scheme. Specifically, for example, in the SDM transmission scheme, part or all of a second SRS resource indicator field, a second precoding and a second number of transmission layers are associated with the first spatial parameter, and part or all of a first SRS resource indicator field, a first precoding and a first number of transmission layers are associated with the second spatial parameter.

One bit state of the SRS resource set indicator field is used to indicate an SFN transmission scheme. Specifically, for example, in the SFN transmission scheme, part or all of a first SRS resource indicator field and a first precoding are associated with the first spatial parameter, and part or all of a second SRS resource indicator field and a second precoding are associated with the second spatial parameter.

One bit state of the SRS resource set indicator field is used to indicate an SFN transmission scheme. Specifically, for example, in the SFN transmission scheme, part or all of a second SRS resource indicator field and a second precoding are associated with the first spatial parameter, and part or all of a first SRS resource indicator field and a first precoding are associated with the second spatial parameter.

In some embodiments, the bit states of the third signaling may be illustrated in Table 4 or Table 5 below.

**Table 4**

| Bit state | Third signaling |
|---|---|
| 000 | a single TRP or single antenna panel transmits the first uplink information: |
| | part or all of a first SRS resource indicator field, a first precoding and a first number of transmission layers of the first uplink information are associated with the first spatial parameter. |
| 001 | a single TRP or single antenna panel transmits the first uplink information: |
| | part or all of a first SRS resource indicator field, a first precoding and a first number of transmission layers are associated with the second spatial parameter. |
| 010 | TDM transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 011 | TDM transmission scheme: |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |
| 100 | SDM transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 101 | SDM transmission scheme: |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |
| 110 | SFN transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 111 | SFN transmission scheme: |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |

**Table 5**

| Bit state | Third signaling |
|---|---|
| 000 | a single TRP or single antenna panel transmits the first uplink information: |
| | part or all of a first SRS resource indicator field, a first precoding and a first number of transmission layers of the first uplink information are associated with the first spatial parameter. |
| 001 | a single TRP or single antenna panel transmits the first uplink information: |
| | part or all of a first SRS resource indicator field, a first precoding and a first number of transmission layers are associated with the second spatial parameter. |
| 010 | SDM transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 011 | SDM transmission scheme: |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |
| 100 | SFN transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 101 | SFN transmission scheme: |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |

It is to be understood that the bit states in the above third signaling and indicated contents may not be limited to the above-described example, and the bit states and the indicated contents may be adjusted flexibly, which is not limited in the embodiments of the present disclosure.

In some embodiments, in a case where the bit state of the third signaling is for indicating the first SDM transmission scheme or the second SDM transmission scheme, the first number of transmission layers is different from the second number of transmission layers. That is, when the bit state of the third signaling is for indicating the SDM transmission scheme, the first number of transmission layers and the second number of transmission layers in the SDM transmission scheme may be different; a first DMRS port and a second DMRS port in the SDM transmission scheme are different, or the first DMRS port and the second DMRS port in the SDM transmission scheme belong to different CDM groups.

In some embodiments, in a case where the bit state of the third signaling is for indicating the first SFN transmission scheme or the second SFN transmission scheme, the first number of transmission layers is the same as the second number of transmission layers. That is, when the bit state of the third signaling is for indicating the SFN transmission scheme, the first number of transmission layers may be the same as the second number of transmission layers in the SFN transmission scheme; the first DMRS port is the same as the second DMRS port in the SFN transmission scheme,.

In some embodiments, a DCI format of the first DCI is DCI format 0_1 or DCI format 0_2. In addition, the first DCI includes at least the third signaling.

In some embodiments, the third signaling occupies available bits in the first DCI, and the first DCI does not carry downlink assignment information (or is without DL assignment). Optionally, a DCI format of the first DCI is DCI format 1_1 or DCI format 1_2.

It is to be noted that when the downlink DCI indicates a TCI state, there is a possibility that the downlink assignment information is not carried, so some bits (such as bits occupied by the third signaling) may be reinterpreted and applied without increasing a bit overhead of the DCI.

Specifically, for example, the terminal device receives the third signaling, and the third signaling is used for determining a transmission scheme for the PUCCH. If two uplink TCI states or two Joint TCI states are indicated for PUCCH resources or a PUCCH resource group, the terminal device performs multi-panel/TRP transmission of all PUCCH resources on Component carrier(s) (CC(s))/Band Width Part(s) (BWP(s)) to which the indicated TCI states are applicable. The transmission scheme for the PUCCH determined based on the third signaling includes one of a TDM transmission scheme, an FDM transmission scheme A, an FDM transmission scheme B, an SFN transmission scheme, or a CDM transmission scheme. In some embodiments, the transmission scheme for the PUCCH is configured by the RRC signaling, that is, the third signaling is carried in the RRC signaling. In some embodiments, the transmission scheme for the PUCCH is configured by the RRC signaling, and the transmission scheme for the PUCCH may be dynamically switched by downlink DCI, for example, by the available bits in the downlink DCI, that is, the third signaling is carried in the downlink DCI, which is DCI format 1_1/1_2 without downlink (DL) assignment.

In some embodiments, the at least one signaling includes the fourth signaling. The fourth signaling is at least for determining one of following transmission schemes: the single-TRP or single-panel transmission scheme, or the TDM transmission scheme; or the fourth signaling is at least for determining one of following transmission schemes: the single-TRP or single-panel transmission scheme, the SDM transmission scheme, or the SFN transmission scheme.

In some embodiments, before the terminal device receives the first DCI, the terminal device receives first configuration information.

The first configuration information is for configuring one of: the TDM transmission scheme, the SDM transmission scheme, or the SFN transmission scheme; or, the first configuration information is for configuring the TDM transmission scheme; or, the first configuration information is for configuring the SDM transmission scheme and the SFN transmission scheme.

In some embodiments, the first configuration information is carried by a higher layer signaling, where the higher layer signaling may be a Radio Resource Control (RRC) signaling or a Media Access Control Control Element (MAC CE) signaling. That is, the first configuration information is carried by one of the RRC signaling or the MAC CE signaling.

Specifically, the network device configures transmission schemes such as the TDM transmission scheme, the SDM transmission scheme, and the SFN transmission scheme through the higher layer signaling. One possibility is that the higher layer signaling configures one of the TDM transmission scheme, the SDM transmission scheme, or the SFN transmission scheme. Another possibility is that the higher layer signaling configures the TDM transmission scheme, or the higher layer signaling configures the SDM transmission scheme and the SFN transmission scheme.

Optionally, the higher layer signaling may be the RRC signaling or the MAC CE. Taking the RRC signaling as an example, a structure may be as follows:

```
 TransmissionScheme-r18 ::= SEQUENCE {
 transmissionScheme-r18 ENUMERATED {sdmScheme, sfnScheme, tdmScheme},
 }
 
```

Alternatively, the structure may be as follows:

```
 TransmissionScheme-r18 ::= SEQUENCE {
 transmissionScheme-r18 ENUMERATED {sdmSchemeAndsfnScheme, tdmScheme},
 }
```

In some embodiments, in a case where the first configuration information is for configuring the TDM transmission scheme, the fourth signaling is for determining one of following transmission schemes: the single-TRP or single-panel transmission scheme, or the TDM transmission scheme. Specifically, for example, some bit states in the fourth signaling are for indicating the single-TRP or single-panel transmission scheme, and some bit states in the fourth signaling are for indicating the TDM transmission scheme.

That is, if the higher layer signaling indicates the TDM transmission scheme, the fourth signaling is for determining one of following transmission schemes: the single-TRP or single-panel transmission scheme, or the TDM transmission scheme; some bit states in the fourth signaling are for indicating the single-TRP or single-panel transmission scheme, and some bit states in the fourth signaling are for indicating the TDM transmission scheme.

For example, the fourth signaling occupies 1 bit.

In some embodiments, in a case where the first configuration information is for configuring the SDM transmission scheme and/or the SFN transmission scheme, the fourth signaling is for determining one of following transmission schemes: the single-TRP or single-panel transmission scheme, the SDM transmission scheme, or the SFN transmission scheme. Specifically, for example, some bit states in the fourth signaling are for indicating the single-TRP or single-panel transmission scheme, some bit states in the fourth signaling are for indicating the SDM transmission scheme, and some bit states in the fourth signaling are for indicating the SFN transmission scheme.

That is, if the higher layer signaling indicates the SDM transmission scheme and/or the SFN transmission scheme, the fourth signaling is for determining one of following transmission schemes: the single-TRP or single-panel transmission scheme, the SDM transmission scheme, or the SFN transmission scheme. Some bit states in the fourth signaling are for indicating the single-TRP or single-panel transmission scheme, some bit states in the fourth signaling are for indicating the SDM transmission scheme, and some bit states in the fourth signaling are for indicating the SFN transmission scheme. For example, the fourth signaling has 2 bits, and indicated contents are as follows.

One of the bit states, such as '00', is used to indicate that part or all of a first SRS resource indicator field, a first precoding and a first number of transmission layer layers are associated with the first spatial parameter.

One of the bit states, such as '01', is used to indicate that part or all of a first SRS resource indicator field, a first precoding and a first number of transmission layer layers are associated with the second spatial parameter.

One of the bit states, such as '10', is used to indicate the SDM transmission scheme. Specifically, for example, in the SDM transmission scheme, part or all of a first SRS resource indicator field, a first precoding and a first number of transmission layers are associated with the first spatial parameter, and part or all of a second SRS resource indicator field, a second precoding and a second number of transmission layers are associated with the second spatial parameter. Alternatively, for example, in the SDM transmission scheme, part or all of a first SRS resource indicator field, a first precoding and a first number of transmission layers are associated with the second spatial parameter, and part or all of a second SRS resource indicator field, a second precoding and a second number of transmission layers are associated with the first spatial parameter. Alternatively, for example, in the SDM transmission scheme, an association relationship and/or an association order between the SRS resource indicator field, the precoding and the number of transmission layers and the first or second spatial parameters are predefined, or configured by a higher layer signaling.

One of the bit states, such as '11', is used to indicate the SFM transmission scheme. Specifically, for example, in the SFN transmission scheme, part or all of a first SRS resource indicator field, a first precoding and a first number of transmission layers are associated with the first spatial parameter, and part or all of a second SRS resource indicator field, a second precoding and a second number of transmission layers are associated with the second spatial parameter. Alternatively, for example, in the SFN transmission scheme, part or all of a first SRS resource indicator field, a first precoding and a first number of transmission layers are associated with the second spatial parameter, and part or all of a second SRS resource indicator field, a second precoding and a second number of transmission layers are associated with the first spatial parameter. Alternatively, for example, in the SFN transmission scheme, an association relationship and/or an association order between the SRS resource indicator field, the precoding and the number of transmission layers and the first or second spatial parameters are predefined, or configured by a higher layer signaling.

In some embodiments, the bit states of the fourth signaling may be illustrated in Table 6 below.

**Table 6**

| Bit state | Fourth signaling |
|---|---|
| 00 | a single TRP or single antenna panel transmits the first uplink information: |
| | part or all of a first SRS resource indicator field, a first precoding and a first number of transmission layers are associated with the first spatial parameter. |
| 01 | a single TRP or single antenna panel transmits the first uplink information: |
| | part or all of a first SRS resource indicator field, a first precoding and a first number of transmission layers are associated with the second spatial parameter. |
| 10 | SDM transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 11 | SFN transmission scheme: |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |

It is to be understood that the bit states in the above fourth signaling and indicated contents may not be limited to the above-described example, and the bit states and the indicated contents may be flexibly adjusted, which is not limited in the embodiments of the present disclosure.

In some embodiments, the at least one signaling includes a fifth signaling. The fifth signaling is at least for determining one of following transmission schemes: the single-TRP or single-panel transmission scheme, or the TDM transmission scheme; or, the fifth signaling is at least for determining one of following transmission schemes: the single-TRP or single-panel transmission scheme, or the SDM transmission scheme; or, the fifth signaling is at least for determining one of following transmission schemes: the single-TRP or single-panel transmission scheme, or the SFN transmission scheme.

In some embodiments, as can be understood, the fifth signaling is used to switch the transmission scheme dynamically.

The fifth signaling is an SRS resource set indicator field, or the fifth signaling is a re-interpretation of a content corresponding to the bit state in the SRS resource set indicator field.

In some embodiments, before the terminal device receives the first DCI, the terminal device receives second configuration information.

The second configuration information is for configuring one of at least one of following transmission schemes: the TDM transmission scheme, the SDM transmission scheme, or the SFN transmission scheme.

In some embodiments, content corresponding to a bit state of the fifth signaling is associated with a transmission scheme configured by the second configuration information. If the second configuration information configures the SDM transmission scheme, the fifth signaling is for determining one of following transmission schemes: the single-TRP or single-panel transmission scheme, or the SDM transmission scheme. If the second configuration information configures the SFN transmission scheme, the fifth signaling is for determining one of following transmission schemes: the single-TRP or single-panel transmission scheme, or the SFN transmission scheme. If the second configuration information configures the TDM transmission scheme, the fifth signaling is for determining one of following transmission schemes: the single-TRP or single-panel transmission scheme, or the TDM transmission scheme.

In some embodiments, the second configuration information is carried by a higher layer signaling. Optionally, the higher layer signaling may be an RRC signaling or an MAC CE.

In some embodiments, the second configuration information may be carried through multiple higher layer signalings. For example, higher layer signaling 1 (such as numberOfRepetitions) is for configuring a TDM transmission scheme, and/or higher layer signaling 2 (such as sdmScheme-r18) is for configuring an SDM transmission scheme, and/or higher layer signaling 3 (such as sfnScheme-r18) is for configuring an SFN transmission scheme. Taking the RRC signaling as an example, structure 1 may be as follows:

```
 PUSCH-Allocation-r18 ::= SEQUENCE {
 numberOfRepetitions ENUMERATED {n1, n2, n3, n4, n7, n8, n12, n16} OPTIONAL,
 sdmScheme-r18 OPTIONAL,
 sfnScheme-r18 OPTIONAL,
 }
```

The higher layer signaling 1 is for configuring a number of times of transmissions of the first uplink information under the TDM scheme. It is to be understood that only a configuration of one higher layer signaling among higher layer signaling 1, higher layer signaling 2, and higher layer signaling 3 is valid. For example, if the higher layer signaling 2 configures the SDM transmission scheme, the higher layer signaling 1 and the higher layer signaling 3 are not configured, or the higher layer signaling 1 is configured as n1, and the higher layer signaling 3 is not configured.

In some embodiments, the second configuration information may be carried through a plurality of higher layer signalings. For example, higher layer signaling 4 (such as numberOfRepetitions) is for configuring a TDM transmission scheme, and/or higher layer signaling 5 (such as transmissionScheme) is for configuring an SDM transmission scheme (such as sdmScheme) or an SFN transmission scheme (such as sfnScheme). Taking the RRC signaling as an example, structure 2 may be as follows:

```
 PUSCH-Allocation-r18 ::= SEQUENCE {
 numberOfRepetitions ENUMERATED {n1, n2, n3, n4, n7, n8, n12, n16} OPTIONAL,
 transmissionScheme ENUMERATED { sdmScheme, sfnScheme } OPTIONAL,
 }
```

The higher layer signaling 4 is for configuring a number of times of transmissions of the first uplink information under the TDM scheme. It is to be understood that if the higher layer signaling 4 is configured in a state other than n1, the higher layer signaling 5 is not configured. If the higher layer signaling 5 configures an SDM transmission scheme or an SFN transmission scheme, the higher layer signaling 4 is configured as n1.

In some embodiments, the second configuration information may be carried through one higher layer signaling. For example, higher layer signaling 6 (such as transmissionScheme-r18) is for configuring a TDM transmission scheme (such as tdmScheme), or an SDM transmission scheme (such as sdmScheme) or an SFN transmission scheme (such as sfnScheme). Taking the RRC signaling as an example, structure 3 may be as follows:

```
 TransmissionScheme-r18 ::= SEQUENCE {
 transmissionScheme-r18 ENUMERATED {sdmScheme, sfnScheme, tdmScheme},
 }
```

If the second configuration information configures the SDM transmission scheme, the fifth signaling is for determining one of following transmission schemes: the single-TRP or single-panel transmission scheme, or the SDM transmission scheme. Some bit states in the fifth signaling are for indicating the single-TRP or single-panel transmission scheme, and some bit states in the fifth signaling are for indicating the SDM transmission scheme. For example, the fifth signaling has 2 bits, and indicated contents are as follows. Example 1:

One of the bit states, such as '00', is used to indicate a single-TRP or single-panel transmission scheme. Part or all of a first SRS resource indicator field, a first precoding and a first number of transmission layer layers are associated with the first spatial parameter.

One of the bit states, such as '01', is used to indicate a single-TRP or single-panel transmission scheme. Part or all of a first SRS resource indicator field, a first precoding and a first number of transmission layer layers are associated with the second spatial parameter.

One of the bit states, such as '10', is used to indicate the SDM transmission scheme. Part or all of a first SRS resource indicator field, a first precoding and a first number of transmission layers are associated with the first spatial parameter; part or all of a second SRS resource indicator field, a second precoding and a second number of transmission layers are associated with the second spatial parameter.

One of the bit states, such as '11', is a reserved bit state.

### Example 2:

One of the bit states, such as '00', is used to indicate a single-TRP or single-panel transmission scheme. Part or all of a first SRS resource indicator field, a first precoding and a first number of transmission layer layers are associated with the first spatial parameter.

One of the bit states, such as '01', is used to indicate a single-TRP or single-panel transmission scheme. Part or all of a first SRS resource indicator field, a first precoding and a first number of transmission layer layers are associated with the second spatial parameter.

One of the bit states, such as '10', is used to indicate the SDM transmission scheme. Part or all of a first SRS resource indicator field, a first precoding and a first number of transmission layers are associated with the first spatial parameter; part or all of a second SRS resource indicator field, a second precoding and a second number of transmission layers are associated with the second spatial parameter. The corresponding power control mode is mode 1. In the power control mode 1, a maximum transmit power of each panel is 23 dBm, and a sum of the maximum transmit powers of the two panels is 26 dBm.

One of the bit states, such as '11', is used to indicate the SDM transmission scheme. Part or all of a first SRS resource indicator field, a first precoding and a first number of transmission layers are associated with the first spatial parameter; part or all of a second SRS resource indicator field, a second precoding and a second number of transmission layers are associated with the second spatial parameter. The corresponding power control mode is mode 2. In the power control mode 1, a sum of maximum transmit powers of two panels is 23 dBm.

### Example 2a:

One of the bit states, such as '00', is used to indicate a single-TRP or single-panel transmission scheme. Part or all of a first SRS resource indicator field, a first precoding and a first number of transmission layer layers are associated with the first spatial parameter.

One of the bit states, such as '01', is used to indicate a single-TRP or single-panel transmission scheme. Part or all of a first SRS resource indicator field, a first precoding and a first number of transmission layer layers are associated with the second spatial parameter.

One of the bit states, such as '10', is used to indicate the SDM transmission scheme. Part or all of a first SRS resource indicator field, a first precoding and a first number of transmission layers are associated with the first spatial parameter; part or all of a second SRS resource indicator field, a second precoding and a second number of transmission layers are associated with the second spatial parameter.

One of the bit states, such as '11', is used to indicate the SDM transmission scheme. Part or all of a first SRS resource indicator field, a first precoding and a first number of transmission layers are associated with the second spatial parameter, and part or all of a second SRS resource indicator field, a second precoding and a second number of transmission layers are associated with the first spatial parameter.

If the second configuration information configures the SFN transmission scheme, the fifth signaling is for determining one of following transmission schemes: the single-TRP or single-panel transmission scheme, or the SFN transmission scheme. Some bit states in the fifth signaling are for indicating the single-TRP or single-panel transmission scheme, and some bit states in the fifth signaling are for indicating the SFN transmission scheme. For example, the fifth signaling has 2 bits, and indicated contents are as follows. Example 3:

One of the bit states, such as '00', is used to indicate a single-TRP or single-panel transmission scheme. Part or all of a first SRS resource indicator field, a first precoding and a first number of transmission layer layers are associated with the first spatial parameter.

One of the bit states, such as '01', is used to indicate a single-TRP or single-panel transmission scheme. Part or all of a first SRS resource indicator field, a first precoding and a first number of transmission layer layers are associated with the second spatial parameter.

One of the bit states, such as '10', is used to indicate the SFN transmission scheme. Part or all of a first SRS resource indicator field, a first precoding and a first number of transmission layers are associated with the first spatial parameter; part or all of a second SRS resource indicator field, a second precoding and a second number of transmission layers are associated with the second spatial parameter.

One of the bit states, such as '11', is a reserved bit state.

### Example 4:

One of the bit states, such as '00', is used to indicate a single-TRP or single-panel transmission scheme. Part or all of a first SRS resource indicator field, a first precoding and a first number of transmission layer layers are associated with the first spatial parameter.

One of the bit states, such as '01', is used to indicate a single-TRP or single-panel transmission scheme. Part or all of a first SRS resource indicator field, a first precoding and a first number of transmission layer layers are associated with the second spatial parameter.

One of the bit states, such as '10', is used to indicate the SFN transmission scheme. Part or all of a first SRS resource indicator field, a first precoding and a first number of transmission layers are associated with the first spatial parameter; part or all of a second SRS resource indicator field, a second precoding and a second number of transmission layers are associated with the second spatial parameter. The corresponding power control mode is mode 1. In the power control mode 1, a maximum transmit power of each panel is 23 dBm, and a sum of the maximum transmit powers of the two panels is 26 dBm.

One of the bit states, such as '11', is used to indicate the SFN transmission scheme. Part or all of a first SRS resource indicator field, a first precoding and a first number of transmission layers are associated with the first spatial parameter; part or all of a second SRS resource indicator field, a second precoding and a second number of transmission layers are associated with the second spatial parameter. The corresponding power control mode is mode 2. In the power control mode 1, a sum of maximum transmit powers of two panels is 23 dBm.

### Example 4a:

One of the bit states, such as '00', is used to indicate a single-TRP or single-panel transmission scheme. Part or all of a first SRS resource indicator field, a first precoding and a first number of transmission layer layers are associated with the first spatial parameter.

One of the bit states, such as '01', is used to indicate a single-TRP or single-panel transmission scheme. Part or all of a first SRS resource indicator field, a first precoding and a first number of transmission layer layers are associated with the second spatial parameter.

One of the bit states, such as '10', is used to indicate the SFN transmission scheme. Part or all of a first SRS resource indicator field, a first precoding and a first number of transmission layers are associated with the first spatial parameter; part or all of a second SRS resource indicator field, a second precoding and a second number of transmission layers are associated with the second spatial parameter.

One of the bit states, such as '11', is used to indicate the SFN transmission scheme. Part or all of a first SRS resource indicator field, a first precoding and a first number of transmission layers are associated with the second spatial parameter, and part or all of a second SRS resource indicator field, a second precoding and a second number of transmission layers are associated with the first spatial parameter.

If the second configuration information configures the TDM transmission scheme, the fifth signaling is for determining one of following transmission schemes: the single-TRP or single-panel transmission scheme, or the TDM transmission scheme. Some bit states in the fifth signaling are for indicating the single-TRP or single-panel transmission scheme, and some bit states in the fifth signaling are for indicating the TDM transmission scheme. For example, the fifth signaling has 2 bits, and indicated contents are as follows. Example 5:

One of the bit states, such as '00', is used to indicate a single-TRP or single-panel transmission scheme. Part or all of a first SRS resource indicator field, a first precoding and a first number of transmission layer layers are associated with the first spatial parameter.

One of the bit states, such as '01', is used to indicate a single-TRP or single-panel transmission scheme. Part or all of a first SRS resource indicator field, a first precoding and a first number of transmission layer layers are associated with the second spatial parameter.

One of the bit states, such as '10', is used to indicate the TDM transmission scheme. Part or all of a first SRS resource indicator field, a first precoding and a first number of transmission layers are associated with the first spatial parameter; part or all of a second SRS resource indicator field, a second precoding and a second number of transmission layers are associated with the second spatial parameter.

One of the bit states, such as '11', is used to indicate the TDM transmission scheme. Part or all of a first SRS resource indicator field, a first precoding and a first number of transmission layers are associated with the second spatial parameter, and part or all of a second SRS resource indicator field, a second precoding and a second number of transmission layers are associated with the first spatial parameter.

In some embodiments, the bit states and contents of the fifth signaling may be illustrated in Tables 7, 8, 9, 10 and 11 below.

**Table 7**

| Bit state | Fifth signaling |
|---|---|
| 00 | a single TRP or single antenna panel transmits the first uplink information: |
| | part or all of a first SRS resource indicator field, a first precoding and a first number of transmission layers are associated with the first spatial parameter. |
| 01 | a single TRP or single antenna panel transmits the first uplink information: |
| | part or all of a first SRS resource indicator field, a first precoding and a first number of transmission layers are associated with the second spatial parameter. |
| 10 | SDM transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 11 | reserved |

**Table 8**

| Bit state | Fifth signaling |
|---|---|
| 00 | a single TRP or single antenna panel transmits the first uplink information: |
| | part or all of a first SRS resource indicator field, a first precoding and a first number of transmission layers are associated with the first spatial parameter. |
| 01 | a single TRP or single antenna panel transmits the first uplink information: |
| | part or all of a first SRS resource indicator field, a first precoding and a first number of transmission layers are associated with the second spatial parameter. |
| | SDM transmission scheme. Power control mode 1 |
| 10 | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| | SDM transmission scheme. Power control mode 2 |
| 11 | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |

**Table 9**

| Bit state | Fifth signaling |
|---|---|
| 00 | a single TRP or single antenna panel transmits the first uplink information: |
| | part or all of a first SRS resource indicator field, a first precoding and a first number of transmission layers are associated with the first spatial parameter. |
| 01 | a single TRP or single antenna panel transmits the first uplink information: |
| | part or all of a first SRS resource indicator field, a first precoding and a first number of transmission layers are associated with the second spatial parameter. |
| 10 | SFN transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 11 | reserved |

**Table 10**

| Bit state | Fifth signaling |
|---|---|
| 00 | a single TRP or single antenna panel transmits the first uplink information: |
| | part or all of a first SRS resource indicator field, a first precoding and a first number of transmission layers are associated with the first spatial parameter. |
| 01 | a single TRP or single antenna panel transmits the first uplink information: |
| | part or all of a first SRS resource indicator field, a first precoding and a first number of transmission layers are associated with the second spatial parameter. |
| 10 | SFN transmission scheme. Power control mode 1 |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 11 | SFN transmission scheme. Power control mode 2 |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |

**Table 11**

| Bit state | Fifth signaling |
|---|---|
| 00 | a single TRP or single antenna panel transmits the first uplink information: |
| | part or all of a first SRS resource indicator field, a first precoding and a first number of transmission layers are associated with the first spatial parameter. |
| 01 | a single TRP or single antenna panel transmits the first uplink information: |
| | part or all of a first SRS resource indicator field, a first precoding and a first number of transmission layers are associated with the second spatial parameter. |
| 10 | TDM transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 11 | TDM transmission scheme. |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |

**Table 12**

| Bit state | Fifth signaling |
|---|---|
| 00 | a single TRP or single antenna panel transmits the first uplink information: |
| | part or all of a first SRS resource indicator field, a first precoding and a first number of transmission layers are associated with the first spatial parameter. |
| 01 | a single TRP or single antenna panel transmits the first uplink information: |
| | part or all of a first SRS resource indicator field, a first precoding and a first number of transmission layers are associated with the second spatial parameter. |
| 10 | SDM transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 11 | SDM transmission scheme: |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |

**Table 13**

| Bit state | Fifth signaling |
|---|---|
| 00 | a single TRP or single antenna panel transmits the first uplink information: |
| | part or all of a first SRS resource indicator field, a first precoding and a first number of transmission layers are associated with the first spatial parameter. |
| 01 | a single TRP or single antenna panel transmits the first uplink information: |
| | part or all of a first SRS resource indicator field, a first precoding and a first number of transmission layers are associated with the second spatial parameter. |
| 10 | SFN transmission scheme: |
| | part or all of a first SRS resource indicator field, a first precoding and a first number of transmission layers are associated with the first spatial parameter, and part or all of a second SRS resource indicator field, a second precoding and a second number of transmission layers are associated with the second spatial parameter. |
| 11 | SFN transmission scheme: |
| | part or all of a first SRS resource indicator field, a first precoding and a first number of transmission layers are associated with the second spatial parameter, and part or all of a second SRS resource indicator field, a second precoding and a second number of transmission layers are associated with the first spatial parameter. |

It is to be understood that the bit states in the above fifth signaling and indicated contents may not be limited to the above-described example, and the bit states and the indicated contents may be flexibly adjusted, which is not limited in the embodiments of the present disclosure.

In some embodiments, if the fifth signaling indicates the single-TRP or single-panel transmission scheme, a first precoding and/or a first number of transmission layers are determined according to a first maximum number of transmission layers. Determining the first precoding and/or the first number of transmission layers according to the first maximum number of transmission layers may be understood as determining a predefined table with which the first precoding and/or the first number of transmission layers are associated. The first maximum number of transmission layers is a maximum number of transmission layers, or a maximum rank or a maximum number of Multiple Input Multiple Output (MIMO) layers, which is supported by the terminal device.

In some embodiments, if the fifth signaling indicates the SDM transmission scheme or the SFN transmission scheme, a first precoding and/or a first number of transmission layers as well as a second precoding and/or a second number of transmission layers are determined according to a second maximum number of transmission layers and a third maximum number of transmission layers respectovely. Determining the first precoding and/or the first number of transmission layers according to the second maximum number of transmission layers may be understood as determining a predefined table with which the first precoding and/or the first number of transmission layers are associated. Determining the second precoding and/or the second number of transmission layers according to the third maximum number of transmission layers may be understood as determining a predefined table with which the second precoding and/or the second number of transmission layers are associated. The second maximum number of transmission layers is a maximum number of transmission layers, or a maximum rank or a maximum number of MIMO layers, which is associated with the first spatial parameter. The third maximum number of transmission layers is a maximum number of transmission layers, or a maximum rank or a maximum number of MIMO layers, which is associated with the second spatial parameter.

In some embodiments, before the terminal device receives the first DCI, the terminal device transmits first information.

The first information is for determining the at least one signaling in the first DCI, and the first information includes at least one of: channel state information (CSI), path loss information, power headroom information, an SRS, or a channel state information reference signal (CSI-RS).

In some embodiments, the first information may be information characterizing transmission quality or information used to measure transmission quality.

Specifically, after the network device receives the first information, if the first information satisfies a condition, the network device transmits the first DCI to the terminal device to indicate dynamically a transmission scheme for the first uplink information.

For example, if the information included in the first information is less than a first threshold, the network device transmits the first DCI to the terminal device to dynamically indicate the transmission scheme for the first uplink information, for example, indicating that the transmission scheme for the first uplink information is an SFN transmission scheme.

For another example, if the transmission quality determined based on the first information is less than the first threshold, or if the transmission quality measured using the first information is less than the first threshold, the network device transmits the first DCI to the terminal device to dynamically indicate a transmission scheme for the first uplink information, for example, indicating that the transmission scheme for the first uplink information is an SFN transmission scheme.

In some embodiments, before the terminal device receives the first DCI, the terminal device transmits second information associated with a first spatial parameter and second information associated with a second spatial parameter.

The second information associated with the first spatial parameter and the second information associated with the second spatial parameter are for determining the at least one signaling in the first DCI, and the second information includes at least one of: CSI, path loss information, power headroom information, an SRS, or a CSI-RS.

In some embodiments, the first information may be information characterizing transmission quality or information used to measure transmission quality.

Specifically, after the network device receives the second information, if the second information satisfies a condition, the network device transmits the first DCI to the terminal device to dynamically indicate a transmission scheme for the first uplink information.

For example, if both the information included in the second information associated with the first spatial parameter and the information included in the second information associated with the second spatial parameter are lower than a second threshold, the network device transmits the first DCI to terminal device to dynamically indicate a transmission scheme for the first uplink information, for example, indicating that the transmission scheme for the first uplink information is an SFN transmission scheme.

For another example, if the transmission qualities determined based on both the second information associated with the first spatial parameter and the second information associated with the second spatial parameter are lower than the second threshold, or if the transmission qualities measured using both the second information associated with the first spatial parameter and the second information associated with the second spatial parameter are lower than the second threshold, the network device transmits the first DCI to terminal device to dynamically indicate the transmission scheme for the first uplink information, for example, indicating that the transmission scheme for the first uplink information is an SFN transmission scheme.

That is, in the embodiments of the present disclosure, the network device may dynamically indicate the transmission scheme for the first uplink information based on the information reported by the terminal device.

As such, in the embodiments, the terminal device may determine the transmission scheme for first uplink information according to at least one signaling in the first DCI, and the transmission scheme for the first uplink information is one of: the SDM transmission scheme, the SFN transmission scheme, the TDM transmission scheme, the FDM transmission scheme, or the single-TRP or single-panel transmission scheme. Accordingly, the network device can indicate the uplink transmission scheme dynamically based on the first DCI, that is, the terminal device can determine the uplink transmission scheme flexibly. Moreover, since the transmission scheme for the first uplink information may be a multi-TRP or multi-panel transmission scheme such as SDM or SFN, the throughput of the system can be improved.

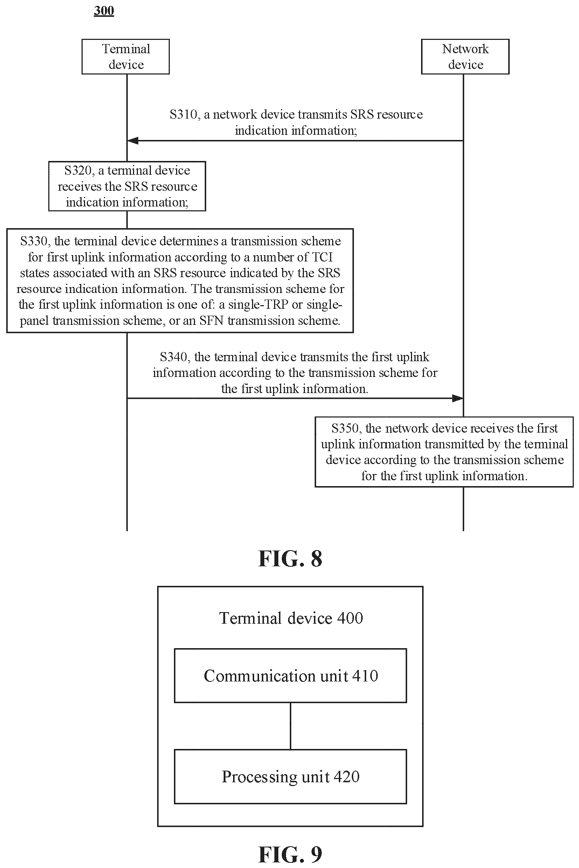

FIG. 8 is a schematic flowchart of a method 300 for wireless communication according to an embodiment of the present disclosure. As illustrated in FIG. 8, the method 300 for wireless communication may include at least some of the following operations.

At S310, a network device transmits SRS resource indication information.

At S320, a terminal device receives the SRS resource indication information.

At S330, the terminal device determines a transmission scheme for first uplink information according to a number of transmission configuration indicator (TCI) states associated with an SRS resource indicated by the SRS resource indication information. The transmission scheme for the first uplink information is one of: a single transmission reception point (single-TRP) or single-panel transmission scheme, or a single frequency network (SFN) transmission scheme.

At S340, the terminal device transmits the first uplink information according to the transmission scheme for the first uplink information.

At S350, the network device receives the first uplink information transmitted by the terminal device according to the transmission scheme for the first uplink information.

In the embodiment, the terminal device may determine the transmission scheme for first uplink information according to the number of TCI states associated with the SRS resource indicated by the SRS resource indication information, and the transmission scheme for the first uplink information is one of: a single-TRP or single-panel transmission scheme, or a SFN transmission scheme. Accordingly, the terminal device can determine the uplink transmission scheme flexibly, and the throughput of the system can be improved.

In some embodiments, the SFN transmission scheme is associated with one SRS resource set and one SRS resource indicator field. That is, only one SRS resource set and one SRS resource indicator field may be configured for the SFN transmission scheme for the first uplink information to ensure the same number of SRS ports associated with the SFN transmission of the first uplink information.

In some embodiments, the first uplink information includes, but is not limited to, at least one of: a PUCCH or a PUSCH.

In some embodiments, the SRS resource indication information may be an SRS resource indicator field.

For example, the SRS resource set indicator field occupies 2 bits, the bit state of the SRS resource set indicator field is 00 or 01 for indicating that the first uplink information is transmitted using a single TRP or single antenna panel, and the bit state of the SRS resource set indicator field is 10 or 11 for indicating that the first uplink information is transmitted using multiple TRPs or multiple panels.

In some embodiments, the operation that the terminal device determines the transmission scheme for the first uplink information according to the number of the TCI states associated with the SRS resource indicated by the SRS resource indication information includes the following operations.

In a case where the SRS resource indicated by the SRS resource indication information is associated with one TCI state, the terminal device determines that the transmission scheme for first uplink information is the single-TRP or single-panel transmission scheme; and/or
in a case where the SRS resource indicated by the SRS resource indication information is associated with two TCI states, the terminal device determines that the transmission scheme for first uplink information is the SFN transmission scheme.

In some embodiments, a transmit precoding matrix indicator (TPMI) of the SFN transmission scheme for the first uplink information needs to be indicated independently.

In some embodiments, the SRS resource indicated by the SRS resource indication information belongs to a first SRS resource set or a second SRS resource set. Each SRS resource in the first SRS resource set is associated with two TCI states, and each SRS resource in the second SRS resource set is associated with one TCI state.

For example, the first SRS resource set may be an SRS resource set dedicated to SFN that is configured by the network device, and the second SRS resource set may be an SRS resource set dedicated to the single TRP or single panel that is configured by the network device.

Specifically, for example, if the SRS resource indicated by the SRS resource indication information belongs to the first SRS resource set, the terminal device determines that the transmission scheme for the first uplink information is an SFN transmission scheme. If the SRS resource indicated by the SRS resource indication information belongs to the second SRS resource set, the terminal device determines that the transmission scheme for the first uplink information is a single-TRP or single-panel transmission scheme.

In some embodiments, the first SRS resource set and/or the second SRS resource set are configured by a Radio Resource Control (RRC) signaling, and/or the first SRS resource set and/or the second SRS resource set are updated or adjusted by a Media Access Control Control Element (MAC CE) signaling.

In some embodiments, the first uplink information is a codebook-based PUSCH transmission, and the transmission scheme for the PUSCH is an SFN transmission scheme. The SRS resource set associated with the PUSCH belongs to the first SRS resource set.

In some embodiments, the first uplink information is a non-codebook-based PUSCH transmission, and the transmission scheme for the PUSCH is an SFN transmission scheme. The SRS resource set associated with the PUSCH belongs to the first SRS resource set. Each of the SRS resources corresponding to the PUSCH is associated with two TCI states.

In some embodiments, a signaling format in which the network device configures an SRS resource set (i.e., SRS-ResourceSet) through the RRC signaling may be as follows:

```
 SRS-ResourceSet ::= SEQUENCE {
 srs-ResourceSetId SRS-ResourceSetId,
 srs-ResourceIdList SEQUENCE (SIZE(1..maxNrofSRS-ResourcesPerSet)) OF SRS-
 ResourceId OPTIONAL,
 ...
 followUnifiedTCIstateSRS ENUMERATED {1stIndicatedTCI, 2ndIndicatedTCI,
 1stAnd2ndIndicatedTCIstate, none } OPTIONAL -Need R
 }
```

In the above-described SRS-ResourceSet, if an SRS-associated unified TCI state (i.e., *followUnifiedTCIstateSRS*) field takes 1stIndicatedTCI or 2ndIndicatedTCI, it indicates that each SRS resource in the SRS resource set configured by the SRS-ResourceSet is associated with one TCI state, that is, the second SRS resource set is configured in this case. If the SRS-associated unified TCI state (i.e., *followUnifiedTCIstateSRS*) field takes 1stAnd2ndIndicatedTCIstate, it indicates that each SRS resource in the SRS resource set configured by the SRS-ResourceSet is associated with two TCI states, that is, the first SRS resource set is configured in this case.

In some embodiments, the MAC CE signaling for updating or adjusting the first SRS resource set and/or the second SRS resource set may include one or more of the following information:
A Serving cell ID;
A BWP ID (BWP ID where the SRS resource set is located);
SRS resource set ID;
Associated TCI state.

The associated TCI state includes one of the following:
a first TCI state (such as a first uplink TCI state (i.e., 1st indicated UL TCI state) or a first joint TCI state (i.e., 1st indicated Joint TCI state));
a second TCI state (such as a second uplink TCI state (i.e., 2nd indicated UL TCI state) or a second joint TCI state (i.e., 2nd indicated Joint TCI state));
a first TCI state and a second TCI state (such as a first uplink TCI state (i.e., 1st indicated UL TCI state) and a second uplink TCI state (i.e., 2nd indicated UL TCI state), or, a first joint TCI state (i.e., 1st indicated Joint TCI state) and a second joint TCI state (i.e., 2nd indicated Joint TCI state)).

In some embodiments, the SRS resource indicated by the SRS resource indication information belongs to a first SRS resource group or a second SRS resource group in a third SRS resource set. Each SRS resource in the first SRS resource group is associated with two TCI states, and each SRS resource in the second SRS resource group is associated with one TCI state.

That is, a part of the SRS resources in the third SRS resource set is configured to be associated with two TCI states, and a part of the SRS resources in the third SRS resource set is configured to be associated with one TCI state.

It is to be note that the third SRS resource set may further include another SRS resource group, which is not limited in the embodiments of the present disclosure.

In some embodiments, the first SRS resource group and/or the second SRS resource group are configured by an RRC signaling, and/or the first SRS resource group and/or the second SRS resource group are updated or adjusted by an MAC CE signaling.

In some embodiments, the first uplink information is a codebook-based PUSCH transmission, and the transmission scheme for the PUSCH is an SFN transmission scheme. The PUSCH is associated with an SRS resource indicated by the SRS resource indication information, and the SRS resource is associated with two TCI states.

In some embodiments, the first uplink information is a non-codebook-based PUSCH transmission, and the transmission scheme for the PUSCH is an SFN transmission scheme. The PUSCH is associated with multiple SRS resources indicated by the SRS resource indication information, and each of the multiple SRS resources is associated with two TCI states.

In some embodiments, a signaling format in which the network device configures an SRS resource set (i.e., SRS-ResourceSet) through the RRC signaling may be as follows:

```
 SRS-ResourceSet ::= SEQUENCE {
 srs-ResourceSetId SRS-ResourceSetId,
 srs-ResourceIdList SEQUENCE (SIZE(1..maxNrofSRS-ResourcesPerSet)) OF SRS-
 ResourceId OPTIONAL,
 ...
 SRS_ResourceGroup1 SEQUENCE {
 followUnifiedTCIstateSRS ENUMERATED {1stIndicatedTCIstate, 2ndIndicatedTCI state,
 1st and2ndIndicatedTCIsate} OPTIONAL
 }
 SRS_ResourceGroup2 SEQUENCE {
 followUnifiedTCIstateSRS ENUMERATED {1stIndicatedTCIstate, 2ndIndicatedTCI state,
 1st and2ndIndicatedTCIsate} OPTIONAL
 }
 }
```

In the above-described SRS-ResourceSet, an SRS resource in the SRS_ResourceGroup1 may be configured to be associated with a first TCI state (i.e., 1stIndicatedTCIstate), a second TCI state (i.e., 2ndIndicatedTCI state), or a first TCI state and a second TCI state (i.e., 1st and 2ndIndicatedTCIsate). An SRS resource in the SRS_ResourceGroup2 may be configured to be associated with a first TCI state (i.e., 1stIndicatedTCIstate), a second TCI state (i.e., 2ndIndicatedTCI state), or a first TCI state and a second TCI state (i.e., 1st and 2ndIndicatedTCIsate).

As such, in the embodiments of the present disclosure, the terminal device may determine a transmission scheme for first uplink information according to a number of TCI states associated with an SRS resource indicated by the SRS resource indication information, and the transmission scheme for the first uplink information is one of: a single-TRP or single-panel transmission scheme, or a SFN transmission scheme. Accordingly, the terminal device can determine the uplink transmission scheme flexibly, and the throughput of the system can be improved.

The method embodiments of the present disclosure have been described in detail above with reference to FIG. 3 to FIG. 8, and apparatus embodiments of the present disclosure have been described in detail below with reference to FIG. 9 to FIG. 13. It is to be understood that the apparatus embodiments and the method embodiments correspond to each other, and similar descriptions may refer to the method embodiments.

FIG. 9 illustrates a schematic block diagram of a terminal device 400 according to an embodiment of the present disclosure. As illustrated in FIG. 9, the terminal device 400 includes a communication unit 410 and a processing unit 420.

The communication unit 410 is configured to receive first downlink control information (DCI).

The processing unit 420 is configured to determine a transmission scheme for first uplink information according to at least one signaling in the first DCI. The transmission scheme for the first uplink information is one of: a space division multiplexing (SDM) transmission scheme, a single frequency network (SFN) transmission scheme, a time division multiplexing (TDM) transmission scheme, a frequency division multiplexing (FDM) transmission scheme, or a single transmission reception point (single-TRP) or single-panel transmission scheme;

The communication unit 410 is further configured to transmit the first uplink information according to the transmission scheme for the first uplink information.

In some embodiments, the at least one signaling includes a first signaling and/or a second signaling. The first signaling is for determining one of following transmission schemes: the TDM transmission scheme, the FDM transmission scheme, the SDM transmission scheme, or the SFN transmission scheme, and the second signaling is for determining TRP information or panel information.

In some embodiments, in a case where a bit state of the second signaling is for indicating that a single TRP or a single panel is used to transmit the first uplink information, the first signaling occupies 0 bit, or the at least one signaling does not include the first signaling; and/or

in a case where the bit state of the second signaling is for indicating that multiple TRPs or multiple panels are used to transmit the first uplink information, the first signaling occupies at least one bit, and different bit states of the first signaling are for respectively indicating at least two of the TDM transmission scheme, the FDM transmission scheme, the SDM transmission scheme, or the SFN transmission scheme.

In some embodiments, in a case where the first signaling occupies one bit, one bit state of the first signaling is for indicating the SDM transmission scheme, and another bit state of the first signaling is for indicating the SFN transmission scheme.

In some embodiments, in a case where the first signaling occupies two bits, different bit states of the first signaling are for respectively indicating at least three of the TDM transmission scheme, the FDM transmission scheme, the SDM transmission scheme, or the SFN transmission scheme.

In some embodiments, the first signaling is associated with an antenna port signaling.

In some embodiments, in a case where a bit state of the second signaling is for indicating that multiple TRPs or multiple panels are used to transmit the first uplink information, and a bit state of the first signaling is for indicating the SDM transmission scheme, the antenna port signaling indicates that demodulation reference signal (DMRS) ports of different code division multiplexing (CDM) groups are used to transmit the first uplink information; or

in a case where the bit state of the second signaling is for indicating that multiple TRPs or multiple panels are used to transmit the first uplink information, and the bit state of the first signaling is for indicating the SFN transmission scheme, the antenna port signaling indicates that a same DMRS port is used to transmit the first uplink information.

In some embodiments, the second signaling is a sounding reference signal (SRS) resource set indicator field, or the second signaling is an indicator field associated with a transmission configuration indicator (TCI).

In some embodiments, the at least one signaling includes a third signaling, the third signaling being at least for determining one of following transmission schemes: the single-TRP or single-panel transmission scheme, the TDM transmission scheme, the FDM transmission scheme, the SDM transmission scheme, or the SFN transmission scheme.

In some embodiments, a bit state of the third signaling includes at least one of: a first bit state, a second bit state, a third bit state, or a fourth bit state.

The first bit state is for indicating a first SDM transmission scheme, the second bit state is for indicating a second SDM transmission scheme, the third bit state is for indicating a first SFN transmission scheme, and the fourth bit state is for indicating a second SFN transmission scheme.

In some embodiments, part or all of a first SRS resource indicator field, a first precoding and a first number of transmission layers in the first SDM transmission scheme are associated with a first spatial parameter, and part or all of a second SRS resource indicator field, a second precoding and a second number of transmission layers in the first SDM transmission scheme are associated with a second spatial parameter; and/or
part or all of a second SRS resource indicator field, a second precoding and a second number of transmission layers in the second SDM transmission scheme are associated with the first spatial parameter, and part or all of a first SRS resource indicator field, a first precoding and a first number of transmission layers in the second SDM transmission scheme are associated with the second spatial parameter; and/or
part or all of a first SRS resource indicator field and a first precoding in the first SFN transmission scheme are associated with the first spatial parameter, and part or all of a second SRS resource indicator field and a second precoding in the first SFN transmission scheme are associated with the second spatial parameter; and/or
part or all of a second SRS resource indicator field and a second precoding in the second SFN transmission scheme are associated with the first spatial parameter, and part or all of a first SRS resource indicator field and a first precoding in the second SFN transmission scheme are associated with the second spatial parameter.

In some embodiments, in a case where a bit state of the third signaling is for indicating the first SDM transmission scheme or the second SDM transmission scheme, the first number of transmission layers is different from the second number of transmission layers; and/or
in a case where the bit state of the third signaling is for indicating the first SFN transmission scheme or the second SFN transmission scheme, the first number of transmission layers is the same as the second number of transmission layers.

In some embodiments, the third signaling occupies at least 3 bits.

In some embodiments, the third signaling is an SRS resource set indicator field, or the third signaling is an indicator field associated with a TCI.

In some embodiments, a DCI format of the first DCI is DCI format 0_1 or DCI format 0_2.

In some embodiments, the third signaling occupies available bits in the first DCI, and the first DCI does not carry downlink assignment information.

In some embodiments, a DCI format of the first DCI is DCI format 1_1 or DCI format 1_2.

In some embodiments, the at least one signaling includes a fourth signaling.

The fourth signaling is at least for determining one of following transmission schemes: the single-TRP or single-panel transmission scheme, or the TDM transmission scheme; or the fourth signaling is at least for determining one of following transmission schemes: the single-TRP or single-panel transmission scheme, the SDM transmission scheme, or the SFN transmission scheme.

In some embodiments, before the terminal device receives the first DCI, the communication unit 410 is further configured to receive first configuration information.

The first configuration information is for configuring one of: the TDM transmission scheme, the SDM transmission scheme, or the SFN transmission scheme; or, the first configuration information is for configuring the TDM transmission scheme; or, the first configuration information is for configuring the SDM transmission scheme and the SFN transmission scheme.

In some embodiments, in a case where the first configuration information is for configuring the TDM transmission scheme, the fourth signaling is for determining one of following transmission schemes: the single-TRP or single-panel transmission scheme, or the TDM transmission scheme.

In some embodiments, some bit states in the fourth signaling are for indicating the single-TRP or single-panel transmission scheme, and some bit states in the fourth signaling are for indicating the TDM transmission scheme.

In some embodiments, in a case where the first configuration information is for configuring the SDM transmission scheme and/or the SFN transmission scheme, the fourth signaling is for determining one of following transmission schemes: the single-TRP or single-panel transmission scheme, the SDM transmission scheme, or the SFN transmission scheme.

In some embodiments, some bit states in the fourth signaling are for indicating the single-TRP or single-panel transmission scheme, some bit states in the fourth signaling are for indicating the SDM transmission scheme, and some bit states in the fourth signaling are for indicating the SFN transmission scheme.

In some embodiments, the first configuration information is carried by one of:
a Radio Resource Control (RRC) signaling, or a Media Access Control Control Element (MAC CE) signaling.

In some embodiments, the at least one signaling includes a fifth signaling.

The fifth signaling is at least for determining one of following transmission schemes: the single-TRP or single-panel transmission scheme, or the TDM transmission scheme; or, the fifth signaling is at least for determining one of following transmission schemes: the single-TRP or single-panel transmission scheme, or the SDM transmission scheme; or, the fifth signaling is at least for determining one of following transmission schemes: the single-TRP or single-panel transmission scheme, or the SFN transmission scheme.

In some embodiments, before the terminal device receives the first DCI, the communication unit 410 is further configured to receive second configuration information.

The second configuration information is for configuring one of at least one of following transmission schemes: the TDM transmission scheme, the SDM transmission scheme, or the SFN transmission scheme.

Content corresponding to a bit state of the fifth signaling is associated with a transmission scheme configured by the second configuration information.

In some embodiments, if the second configuration information configures the SDM transmission scheme, the fifth signaling is for determining one of following transmission schemes: the single-TRP or single-panel transmission scheme, or the SDM transmission scheme;
if the second configuration information configures the SFN transmission scheme, the fifth signaling is for determining one of following transmission schemes: the single-TRP or single-panel transmission scheme, or the SFN transmission scheme;
if the second configuration information configures the TDM transmission scheme, the fifth signaling is for determining one of following transmission schemes: the single-TRP or single-panel transmission scheme, or the TDM transmission scheme.

In some embodiments, if the fifth signaling is for determining one of following transmission schemes: the single-TRP or single-panel transmission scheme, or the SDM transmission scheme, some bit states in the fifth signaling are for indicating the single-TRP or single-panel transmission scheme, and some bit states in the fifth signaling are for indicating the SDM transmission scheme.

In some embodiments, if the fifth signaling is for determining one of following transmission schemes: the single-TRP or single-panel transmission scheme, or the SFN transmission scheme, some bit states in the fifth signaling are for indicating the single-TRP or single-panel transmission scheme, and some bit states in the fifth signaling are for indicating the SFN transmission scheme.

In some embodiments, if the fifth signaling is for determining one of following transmission schemes: the single-TRP or single-panel transmission scheme, or the TDM transmission scheme, some bit states in the fifth signaling are for indicating the single-TRP or single-panel transmission scheme, and some bit states in the fifth signaling are for indicating the TDM transmission scheme.

In some embodiments, if the fifth signaling is for determining the single-TRP or single-panel transmission scheme, a first precoding and/or a first number of transmission layers are determined based on a first maximum number of transmission layers.

In some embodiments, if the fifth signaling is for determining the SDM transmission scheme or the SFN transmission scheme, a first precoding and/or a first number of transmission layers and a second precoding and/or a second number of transmission layers are determined based on a second maximum number of transmission layers and a third maximum number of transmission layers.

In some embodiments, before the terminal device receives the first DCI, the communication unit 410 is further configured to transmit first information.

The first information is for determining the at least one signaling in the first DCI, and the first information includes at least one of: channel state information (CSI), path loss information, power headroom information, an SRS, or a channel state information reference signal (CSI-RS).

In some embodiments, before the terminal device receives the first DCI, the communication unit 410 is further configured to transmit second information associated with a first spatial parameter and second information associated with a second spatial parameter.

The second information associated with the first spatial parameter and the second information associated with the second spatial parameter are for determining the at least one signaling in the first DCI, and the second information includes at least one of: CSI, path loss information, power headroom information, an SRS, or a CSI-RS.

In some embodiments, the first uplink information includes at least one of:
a physical uplink control channel (PUCCH) or a physical uplink shared channel (PUSCH).

In some embodiments, the communication unit may be a communication interface or transceiver or an input-output interface of a communication chip or a system-on-chip. The processing unit may be one or more processors.

It is to be understood that the terminal device 400 according to the embodiments of the present disclosure may correspond to the terminal device in the method embodiments of the present disclosure, and the above and other operations and/or functions of the individual units in the terminal device 400 are designed to implement the respective flow of the second network device in the method 200 illustrated in FIG. 3, respectively, which will not be repetition here for the sake of brevity.

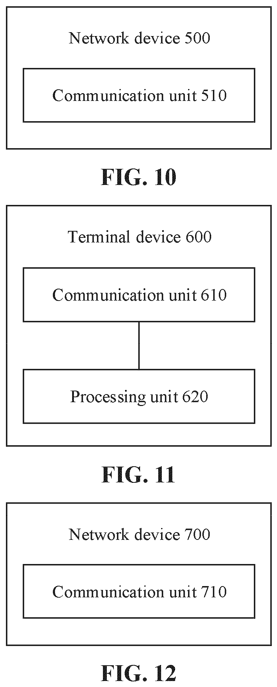

FIG. 10 illustrates a schematic block diagram of a network device 500 according to an embodiment of the present disclosure. As illustrated in FIG. 10, the network device 500 includes a communication unit 510.

The communication unit 510 is configured to transmit the first downlink control information DCI. At least one signaling in the first DCI is used by a terminal device to determine a transmission scheme for first uplink information, and the transmission scheme for the first uplink information is one of: a space division multiplexing (SDM) transmission scheme, a single frequency network (SFN) transmission scheme, a time division multiplexing (TDM) transmission scheme, a frequency division multiplexing (FDM) transmission scheme, or a single transmission reception point (single-TRP) or single-panel transmission scheme.

The communication unit 510 is further configured to receive the first uplink information transmitted by the terminal device according to the transmission scheme for the first uplink information.

In some embodiments, the at least one signaling includes a first signaling and/or a second signaling. The first signaling is for determining one of the following transmission schemes: the TDM transmission scheme, the FDM transmission scheme, the SDM transmission scheme, or the SFN transmission scheme, and the second signaling is for determining TRP information or panel information.

In some embodiments, in a case where a bit state of the second signaling is for indicating that a single TRP or a single panel is used to transmit the first uplink information, the first signaling occupies 0 bit, or the at least one signaling does not include the first signaling; and/or
in a case where the bit state of the second signaling is for indicating that multiple TRPs or multiple panels are used to transmit the first uplink information, the first signaling occupies at least one bit, and different bit states of the first signaling are for respectively indicating at least two of the TDM transmission scheme, the FDM transmission scheme, the SDM transmission scheme, or the SFN transmission scheme.

In some embodiments, in a case where the first signaling occupies one bit, one bit state of the first signaling is for indicating the SDM transmission scheme, and another bit state of the first signaling is for indicating the SFN transmission scheme.

In some embodiments, in a case where the first signaling occupies two bits, different bit states of the first signaling are for respectively indicating at least three of the TDM transmission scheme, the FDM transmission scheme, the SDM transmission scheme, or the SFN transmission scheme.

In some embodiments, the first signaling is associated with an antenna port signaling.

In some embodiments, in a case where a bit state of the second signaling is for indicating that multiple TRPs or multiple panels are used to transmit the first uplink information, and a bit state of the first signaling is for indicating the SDM transmission scheme, the antenna port signaling indicates that demodulation reference signal (DMRS) ports of different code division multiplexing (CDM) groups are used to transmit the first uplink information; or
in a case where the bit state of the second signaling is for indicating that multiple TRPs or multiple panels are used to transmit the first uplink information, and the bit state of the first signaling is for indicating the SFN transmission scheme, the antenna port signaling indicates that a same DMRS port is used to transmit the first uplink information.

In some embodiments, the second signaling is a sounding reference signal (SRS) resource set indicator field, or the second signaling is an indicator field associated with a transmission configuration indicator (TCI).

In some embodiments, the at least one signaling includes a third signaling, the third signaling being at least for determining one of following transmission schemes: the single-TRP or single-panel transmission scheme, the TDM transmission scheme, the FDM transmission scheme, the SDM transmission scheme, or the SFN transmission scheme.

In some embodiments, a bit state of the third signaling includes at least one of: a first bit state, a second bit state, a third bit state, or a fourth bit state.

The first bit state is for indicating a first SDM transmission scheme, the second bit state is for indicating a second SDM transmission scheme, the third bit state is for indicating a first SFN transmission scheme, and the fourth bit state is for indicating a second SFN transmission scheme.

In some embodiments, part or all of a first SRS resource indicator field, a first precoding and a first number of transmission layers in the first SDM transmission scheme are associated with a first spatial parameter, and part or all of a second SRS resource indicator field, a second precoding and a second number of transmission layers in the first SDM transmission scheme are associated with a second spatial parameter; and/or
part or all of a second SRS resource indicator field, a second precoding and a second number of transmission layers in the second SDM transmission scheme are associated with the first spatial parameter, and part or all of a first SRS resource indicator field, a first precoding and a first number of transmission layers in the second SDM transmission scheme are associated with the second spatial parameter; and/or
part or all of a first SRS resource indicator field and a first precoding in the first SFN transmission scheme are associated with the first spatial parameter, and part or all of a second SRS resource indicator field and a second precoding in the first SFN transmission scheme are associated with the second spatial parameter; and/or
part or all of a second SRS resource indicator field and a second precoding in the second SFN transmission scheme are associated with the first spatial parameter, and part or all of a first SRS resource indicator field and a first precoding in the second SFN transmission scheme are associated with the second spatial parameter.

In some embodiments, in a case where a bit state of the third signaling is for indicating the first SDM transmission scheme or the second SDM transmission scheme, the first number of transmission layers is different from the second number of transmission layers; and/or
in a case where the bit state of the third signaling is for indicating the first SFN transmission scheme or the second SFN transmission scheme, the first number of transmission layers is the same as the second number of transmission layers.

In some embodiments, the third signaling occupies at least 3 bits.

In some embodiments, the third signaling is an SRS resource set indicator field, or the third signaling is an indicator field associated with a TCI.

In some embodiments, a DCI format of the first DCI is DCI format 0_1 or DCI format 0_2.

In some embodiments, the third signaling occupies available bits in the first DCI, and the first DCI does not carry downlink assignment information.

In some embodiments, a DCI format of the first DCI is DCI format 1_1 or DCI format 1_2.

In some embodiments, the at least one signaling includes a fourth signaling,

The fourth signaling is at least for determining one of following transmission schemes: the single-TRP or single-panel transmission scheme, or the TDM transmission scheme; or the fourth signaling is at least for determining one of following transmission schemes: the single-TRP or single-panel transmission scheme, the SDM transmission scheme, or the SFN transmission scheme.

In some embodiments, before the network device transmits the first DCI, the communication unit 510 is further configured to transmit first configuration information.

The first configuration information is for configuring one of: the TDM transmission scheme, the SDM transmission scheme, or the SFN transmission scheme; or, the first configuration information is for configuring the TDM transmission scheme; or, the first configuration information is for configuring the SDM transmission scheme and the SFN transmission scheme.

In some embodiments, in a case where the first configuration information is for configuring the TDM transmission scheme, the fourth signaling is for determining one of following transmission schemes: the single-TRP or single-panel transmission scheme, or the TDM transmission scheme.

In some embodiments, some bit states in the fourth signaling are for indicating the single-TRP or single-panel transmission scheme, and some bit states in the fourth signaling are for indicating the TDM transmission scheme.

In some embodiments, in a case where the first configuration information is for configuring the SDM transmission scheme and/or the SFN transmission scheme, the fourth signaling is for determining one of following transmission schemes: the single-TRP or single-panel transmission scheme, the SDM transmission scheme, or the SFN transmission scheme.

In some embodiments, some bit states in the fourth signaling are for indicating the single-TRP or single-panel transmission scheme, some bit states in the fourth signaling are for indicating the SDM transmission scheme, and some bit states in the fourth signaling are for indicating the SFN transmission scheme.

In some embodiments, the first configuration information is carried by one of:
a Radio Resource Control (RRC) signaling, or a Media Access Control Control Element (MAC CE) signaling.

In some embodiments, the at least one signaling includes a fifth signaling,

The fifth signaling is at least for determining one of following transmission schemes: the single-TRP or single-panel transmission scheme, or the TDM transmission scheme; or, the fifth signaling is at least for determining one of following transmission schemes: the single-TRP or single-panel transmission scheme, or the SDM transmission scheme; or, the fifth signaling is at least for determining one of following transmission schemes: the single-TRP or single-panel transmission scheme, or the SFN transmission scheme.

In some embodiments, before the network device transmits the first DCI, the communication unit 510 is further configured to transmit second configuration information.

The second configuration information is for configuring one of at least one of following transmission schemes: the TDM transmission scheme, the SDM transmission scheme, or the SFN transmission scheme.

Content corresponding to a bit state of the fifth signaling is associated with a transmission scheme configured by the second configuration information.

In some embodiments, if the second configuration information configures the SDM transmission scheme, the fifth signaling is for determining one of following transmission schemes: the single-TRP or single-panel transmission scheme, or the SDM transmission scheme;
if the second configuration information configures the SFN transmission scheme, the fifth signaling is for determining one of following transmission schemes: the single-TRP or single-panel transmission scheme, or the SFN transmission scheme;
if the second configuration information configures the TDM transmission scheme, the fifth signaling is for determining one of following transmission schemes: the single-TRP or single-panel transmission scheme, or the TDM transmission scheme.

In some embodiments, if the fifth signaling is for determining one of following transmission schemes: the single-TRP or single-panel transmission scheme, or the SDM transmission scheme, some bit states in the fifth signaling are for indicating the single-TRP or single-panel transmission scheme, and some bit states in the fifth signaling are for indicating the SDM transmission scheme.

In some embodiments, if the fifth signaling is for determining one of following transmission schemes: the single-TRP or single-panel transmission scheme, or the SFN transmission scheme, some bit states in the fifth signaling are for indicating the single-TRP or single-panel transmission scheme, and some bit states in the fifth signaling are for indicating the SFN transmission scheme.

In some embodiments, if the fifth signaling is for determining one of following transmission schemes: the single-TRP or single-panel transmission scheme, or the TDM transmission scheme, some bit states in the fifth signaling are for indicating the single-TRP or single-panel transmission scheme, and some bit states in the fifth signaling are for indicating the TDM transmission scheme.

In some embodiments, if the fifth signaling is for determining the single-TRP or single-panel transmission scheme, a first precoding and/or a first number of transmission layers are determined based on a first maximum number of transmission layers.

In some embodiments, if the fifth signaling is for determining the SDM transmission scheme or the SFN transmission scheme, a first precoding and/or a first number of transmission layers and a second precoding and/or a second number of transmission layers are determined based on a second maximum number of transmission layers and a third maximum number of transmission layers.

In some embodiments, before the network device transmits the first DCI, the communication unit 510 is further configured to receive first information.

The first information is for determining the at least one signaling in the first DCI, and the first information includes at least one of: channel state information (CSI), path loss information, power headroom information, an SRS, or a channel state information reference signal (CSI-RS).

In some embodiments, before the network device transmits the first DCI, the communication unit 510 is further configured to receive second information associated with a first spatial parameter and second information associated with a second spatial parameter.

The second information associated with the first spatial parameter and the second information associated with the second spatial parameter are for determining the at least one signaling in the first DCI, and the second information includes at least one of: CSI, path loss information, power headroom information, an SRS, or a CSI-RS.

In some embodiments, the first uplink information includes at least one of:
a physical uplink control channel (PUCCH) or a physical uplink shared channel (PUSCH).

In some embodiments, the communication unit may be a communication interface or transceiver or an input-output interface of a communication chip or a system-on-chip.

It is to be understood that the network device 500 according to the embodiments of the present disclosure may correspond to the network device in the method embodiments of the present disclosure, and the above and other operations and/or functions of the individual units in the network device 500 are designed to implement the respective flow of the second network device in the method 200 illustrated in FIG. 3 respectively, which will not be repetition here for the sake of brevity.

FIG. 11 illustrates a schematic block diagram of a terminal device 600 according to an embodiment of the present disclosure. As illustrated in FIG. 11, the terminal device 600 includes a communication unit 610 and a processing unit 620.

The communication unit 610 is configured to receive sounding reference signal (SRS) resource indication information.

The processing unit 620 is configured to determine a transmission scheme for first uplink information according to a number of transmission configuration indicator (TCI) states associated with an SRS resource indicated by the SRS resource indication information. The transmission scheme for the first uplink information is one of: a single transmission reception point (single-TRP) or single-panel transmission scheme, or a single frequency network (SFN) transmission scheme.

The communication unit 610 is further configured to transmit the first uplink information according to the transmission scheme for the first uplink information.

In some embodiments, the processing unit 620 is specifically configured to:
in a case where the SRS resource indicated by the SRS resource indication information is associated with one TCI state, determine that the transmission scheme for first uplink information is the single-TRP or single-panel transmission scheme; and/or
in a case where the SRS resource indicated by the SRS resource indication information is associated with two TCI states, determine that the transmission scheme for first uplink information is the SFN transmission scheme.

In some embodiments, the SRS resource indicated by the SRS resource indication information belongs to a first SRS resource set or a second SRS resource set. Each SRS resource in the first SRS resource set is associated with two TCI states, and each SRS resource in the second SRS resource set is associated with one TCI state.

In some embodiments, the first SRS resource set and/or the second SRS resource set are configured by a Radio Resource Control (RRC) signaling, and/or the first SRS resource set and/or the second SRS resource set are updated or adjusted by a Media Access Control Control Element (MAC CE) signaling.

In some embodiments, the SRS resource indicated by the SRS resource indication information belongs to a first SRS resource group or a second SRS resource group in a third SRS resource set.

Each SRS resource in the first SRS resource group is associated with two TCI states, and each SRS resource in the second SRS resource group is associated with one TCI state.

In some embodiments, the first SRS resource group and/or the second SRS resource group are configured by an RRC signaling, and/or the first SRS resource group and/or the second SRS resource group are updated or adjusted by an MAC CE signaling.

In some embodiments, the SFN transmission scheme is associated with one SRS resource set and one SRS resource indicator field.

In some embodiments, the first uplink information includes at least one of:
a physical uplink control channel (PUCCH) or a physical uplink shared channel (PUSCH).

In some embodiments, the communication unit may be a communication interface or transceiver or an input-output interface of a communication chip or a system-on-chip. The processing unit may be one or more processors.

It is to be understood that the terminal device 600 according to the embodiments of the present disclosure may correspond to the terminal device in the method embodiments of the present disclosure, and the above and other operations and/or functions of the individual units in the terminal device 600 are designed to implement the respective flow of the second network device in the method 300 illustrated in FIG. 8, respectively, which will not be repetition here for the sake of brevity.

FIG. 12 illustrates a schematic block diagram of a network device 700 according to an embodiment of the present disclosure. As illustrated in FIG. 12, the network device 700 includes a communication unit 710.

The processing unit 710 is configured to transmit sounding reference signal (SRS) resource indication information. A number of transmission configuration indicator (TCI) states associated with an SRS resource indicated by the SRS resource indication information is used by a terminal device to determine a transmission scheme for the first uplink information, and the transmission scheme for the first uplink information is one of: a single transmission reception point (single-TRP) or single-panel transmission scheme, or a single frequency network (SFN) transmission scheme.

The communication unit 710 is further configured to receive the first uplink information transmitted by the terminal device according to the transmission scheme for the first uplink information.

In some embodiments, using the number of the TCI states associated with the SRS resource indicated by the SRS resource indication information by the terminal device to determine the transmission scheme for the first uplink information includes:
in a case where the SRS resource indicated by the SRS resource indication information is associated with one TCI state, the transmission scheme for the first uplink information is the single-TRP or single-panel transmission scheme; and/or
in a case where the SRS resource indicated by the SRS resource indication information is associated with two TCI states, the transmission scheme for the first uplink information is the SFN transmission scheme.

In some embodiments, the SRS resource indicated by the SRS resource indication information belongs to a first SRS resource set or a second SRS resource set. Each SRS resource in the first SRS resource set is associated with two TCI states, and each SRS resource in the second SRS resource set is associated with one TCI state.

In some embodiments, the first SRS resource set and/or the second SRS resource set are configured by a Radio Resource Control (RRC) signaling, and/or the first SRS resource set and/or the second SRS resource set are updated or adjusted by a Media Access Control Control Element (MAC CE) signaling.

In some embodiments, the SRS resource indicated by the SRS resource indication information belongs to a first SRS resource group or a second SRS resource group in a third SRS resource set.

Each SRS resource in the first SRS resource group is associated with two TCI states, and each SRS resource in the second SRS resource group is associated with one TCI state.

In some embodiments, the first SRS resource group and/or the second SRS resource group are configured by an RRC signaling, and/or the first SRS resource group and/or the second SRS resource group are updated or adjusted by an MAC CE signaling.

In some embodiments, the SFN transmission scheme is associated with one SRS resource set and one SRS resource indicator field.

In some embodiments, the first uplink information includes at least one of:
a physical uplink control channel (PUCCH) or a physical uplink shared channel (PUSCH).

In some embodiments, the communication unit may be a communication interface or transceiver or an input-output interface of a communication chip or a system-on-chip. The processing unit may be one or more processors.

It is to be understood that the network device 700 according to the embodiments of the present disclosure may correspond to the network device in the method embodiments of the present disclosure, and the above and other operations and/or functions of the individual units in the network device 700 are designed to implement the respective flow of the second network device in the method 300 illustrated in FIG. 8 respectively, which will not be repetition here for the sake of brevity.

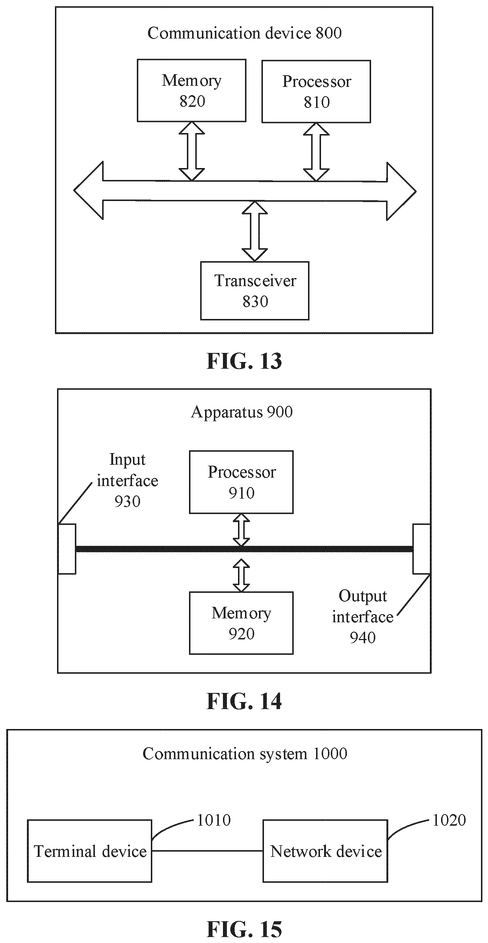

FIG. 13 is a schematic structural diagram of a communication device 800 according to an embodiment of the present disclosure. A communication device 800 illustrated in FIG. 13 includes a processor 810 that can call and execute a computer program from a memory to implement the method in an embodiment of the present disclosure.

In some embodiments, as illustrated in FIG. 13, the communication device 800 may also include a memory 820. The processor 810 may call and execute a computer program from memory 820 to implement the method in the embodiments of the present disclosure.

The memory 820 may be a separate device independent of the processor 810 or may be integrated in the processor 810.

In some embodiments, as illustrated in FIG. 13, the communication device 800 may also include a transceiver 830. The processor 810 may control the transceiver 830 to communicate with other devices, and in particular transmit information or data to other devices, or receive information or data sent by other devices.

The transceiver 830 may include a transmitter and a receiver. The transceiver 830 may further include antennas. The number of antennas may be one or more.

In some embodiments, the processor 810 may implement the functions of a processing unit in the terminal device, or the processor 810 may implement the functions of a processing unit in the network device, which will not be described herein for the sake of brevity.

In some embodiments, the transceiver 830 may implement the function of a communication unit in the terminal device, which will not be repetition here for the sake of brevity.

In some embodiments, the transceiver 830 may implement the function of a communication unit in the network device, which will not be repetition here for the sake of brevity.

In some embodiments, the communication device 800 may be specifically a network device of the embodiments of the present disclosure, and the communication device 800 may implement corresponding processes implemented by the network device in various methods of the embodiments of the present disclosure, which will not be repetition here for the sake of brevity.

In some embodiments, the communication device 800 specifically may be a terminal device of embodiments of the present disclosure, and the communication device 800 may implement corresponding processes implemented by the terminal device in the respective methods of the embodiments of the present disclosure, which will not be repetition here for the sake of brevity.

FIG. 14 is a schematic structural diagram of an apparatus according to an embodiment of the present disclosure. An apparatus 900 illustrated in FIG. 14 includes a processor 910 that can call and execute a computer program from memory to implement the method in an embodiment of the present disclosure.

In some embodiments, as illustrated in FIG. 14, the apparatus 900 may also include a memory 920. The processor 910 may call and execute a computer program from memory 920 to implement the method in the embodiments of the present disclosure.

The memory 920 may be a separate device independent of the processor 910 or may be integrated in the processor 910.

In some embodiments, the apparatus 900 may also include an input interface 930. The processor 910 may control the input interface 930 to communicate with other devices or chips, and in particular obtain information or data sent by other devices or chips. Optionally, the processor 910 may be located on-chip or off-chip.

In some embodiments, the processor 910 may implement the functions of a processing unit in the terminal device, or the processor 910 may implement the functions of a processing unit in the network device, which will not be described herein for the sake of brevity.

In some embodiments, the input interface 930 may implement the functions of a communication unit in the terminal device, or the input interface 930 may implement the functions of a communication unit in the network device, which will not be described herein for the sake of brevity.

In some embodiments, the apparatus 900 may also include an output interface 940. The processor 910 may control the output interface 940 to communicate with other devices or chips, and in particular output information or data to other devices or chips. Optionally, the processor 910 may be located on-chip or off-chip.

In some embodiments, the output interface 940 may implement the functions of a communication unit in the terminal device, or the output interface 940 may implement the functions of a communication unit in the network device, which will not be described herein for the sake of brevity.

In some embodiments, the apparatus may be applied to be a network device of an embodiment of the present disclosure, and the apparatus may implement corresponding processes implemented by the network device in the respective methods of the embodiments of the present disclosure, which will not be repetition here for the sake of brevity.

In some embodiments, the apparatus may be applied to be a terminal device of an embodiment of the present disclosure, and the apparatus may implement corresponding processes implemented by the terminal device in the respective methods of the embodiments of the present disclosure, which will not be repetition here for the sake of brevity.

In some embodiments, the apparatus mentioned in the embodiments of the present disclosure may also be a chip. It is to be understood that the chip referred to in embodiments of the present disclosure may also be referred to as system-level chip, system chip, chip system or system-on-chip or the like.

FIG. 15 is a schematic block diagram of a communication system 1000 according to an embodiment of the present disclosure. As illustrated in FIG. 15, the communication system 1000 includes a terminal device 1010 and a network device 1020.

The terminal device 1010 may be configured to implement corresponding functions implemented by the terminal device in the above method, and the network device 1020 may be configured to implement corresponding functions implemented by the network device in the above method, which will not be repetition here for the sake of brevity.

It is to be understood that the processor may be an integrated circuit chip having signal processing capability. In implementation, the operations of the above method embodiments may be accomplished by integrated logic circuitry of hardware in processor or instructions in the form of software. The processor may be a general purpose processor, a digital signal processor (DSP), an application specific integrated circuit (ASIC), a field programmable gate array (FPGA) or other programmable logic devices, discrete gates or transistor logic devices, or discrete hardware components. The processor may implement or execute the methods, operations and logic diagrams disclosed in the embodiments of the present disclosure. The general purpose processor may be a microprocessor or any conventional processor. The operations of the method disclosed in the embodiments of the present disclosure may be directly embodied as being executed by a hardware decoding processor or being executed by the hardware and software modules in a decoding processor. The software modules may be located in a storage medium mature in the art, such as a random access memory, a flash memory, a read-only memory, a programmable read-only memory or an electrically erasable programmable memory, a register, etc. The storage medium is located in the memory, and the processor reads the information in the memory to complete the operations of the aforementioned method in conjunction with its hardware.

It will be appreciated that the memory in the embodiments of the present disclosure may be a volatile memory or a non-volatile memory, or may also include both a volatile memory and a non-volatile memory. The non-volatile memory may be a read-only memory (ROM), a programmable ROM (PROM), an erasable PROM (EPROM), an electrically EPROM (EPROM) or a flash memory. The volatile memory may be a random access memory (RAM), which serves as an external cache. By way of illustration but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM). It is to be noted that the memory in the systems and methods described herein is intended to include, but is not limited to, these memories and any other suitable types of memory.

It is to be understood that the memory described above is exemplary but not limiting. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synchronous link DRAM (SLDRAM), a direct rambus RAM (DR RAM), etc. That is, the memory in the embodiments of the present disclosure is intended to include, but is not limited to, these memories and any other suitable types of memory.

In an embodiment of the present disclosure, there is further provided a computer-readable storage medium, configured to store a computer program.

In some embodiments, the computer readable storage medium may be applied to the network device of the embodiments of the present disclosure, and the computer program causes a computer to implement corresponding processes implemented by the network device in the methods of the embodiments of the present disclosure, which will not be repetition here for the sake of brevity.

In some embodiments, the computer readable storage medium may be applied to the terminal device of the embodiments of the present disclosure, and the computer program causes a computer to implement corresponding processes implemented by the terminal device in the methods of the embodiments of the present disclosure, which will not be repetition here for the sake of brevity.

In an embodiment of the present disclosure, there is further provided a computer program product, which includes computer program instructions.

In some embodiments, the computer program product may be applied to the network device of the embodiments of the present disclosure, and the computer program instructions cause a computer to implement corresponding processes implemented by the network device in the methods of the embodiments of the present disclosure, which will not be repetition here for the sake of brevity.

In some embodiments, the computer program product may be applied to the terminal device of the embodiments of the present disclosure, and the computer program instructions cause a computer to implement corresponding processes implemented by the terminal device in the methods of the embodiments of the present disclosure, which will not be repetition here for the sake of brevity.

In an embodiment of the present disclosure, there is further provided a computer program.

In some embodiments, the computer program may be applied to the network device of the embodiments of the present disclosure, the computer program, when running on a computer, causes the computer to implement corresponding processes implemented by the network device in the methods of the embodiments of the present disclosure, which will not be repetition here for the sake of brevity.

In some embodiments, the computer program may be applied to the terminal device of the embodiments of the present disclosure, the computer program, when running on a computer, causes the computer to implement corresponding processes implemented by the terminal device in the methods of the embodiments of the present disclosure, which will not be repetition here for the sake of brevity.

Those of ordinary skill in the art may realize that the various example units and algorithm steps described in connection with the embodiments disclosed herein may be implemented in electronic hardware or a combination of computer software and electronic hardware. Whether these functions are performed in hardware or software depends on the specific application and design constraints of the technical solution. Professionals may use different methods for each particular application to implement the described functionality, but such implementation should not be considered beyond the scope of the present disclosure.

Those skilled in the art will clearly appreciate that, for convenience and conciseness of description, the specific operating processes of the above-described systems, apparatuses and units may refer to the corresponding processes in the aforementioned method embodiments and will not be repetition herein.

In several embodiments provided herein, it is to be understood that the disclosed systems, apparatuses and methods may be implemented in other manners. For example, the above-described embodiments of the apparatus is only schematic, for example, the division of the units is only a logical function division, and in practice, there may be another division manner, for example, multiple units or components may be combined or integrated into another system, or some features may be ignored or not performed. On the other hand, the coupling or direct coupling or communication connection between each other illustrated or discussed may be indirect coupling or communication connection through some interfaces, devices or units, and may be electrical, mechanical or other form.

The units illustrated as separate elements may or may not be physically separated, and the elements displayed as units may or may not be physical units, i.e. may be located in a place, or may be distributed over a plurality of network units. Part or all of the units may be selected according to the actual needs to achieve the purpose of the embodiments of the present disclosure.

In addition, each functional unit in each embodiment of the present disclosure may be integrated in one processing unit, each unit may exist physically alone, or two or more units may be integrated in one unit.

When the functions are realized in the form of software functional units and sold or used as an independent product, they may be stored in a computer readable storage medium. Based on such an understanding, the technical solutions according to the disclosure in essence or the part contributing to the prior art or the part of the technical solution may be embodied in the form of a software product, and the computer software product is stored in a storage medium, which includes several instructions so that a computer device (may be a personal computer, a server, a network device or the like) implements all or part of the method according to respective embodiments of the disclosure. The aforementioned storage medium includes various media capable of storing a program code such as a USB disk, a mobile hard drive disk, a read-only memory (ROM), a random access memory (RAM), a magnetic disk or an optical disk.

The above descriptions are merely specific implementations of the disclosure, but are not intended to limit the scope of protection of the disclosure. Any variation or replacement readily figured out by a person skilled in the art within the technical scope disclosed in the disclosure shall fall within the scope of protection of the disclosure. Therefore, the scope of protection of the disclosure is defined by the scope of protection of the claims.

## Claims

1. A method for wireless communication, comprising:
receiving, by a terminal device, first downlink control information, DCI;
determining, by the terminal device, a transmission scheme for first uplink information according to at least one signaling in the first DCI, wherein the transmission scheme for the first uplink information is one of: a space division multiplexing, SDM, transmission scheme, a single frequency network, SFN, transmission scheme, a time division multiplexing, TDM, transmission scheme, a frequency division multiplexing, FDM, transmission scheme, or a single transmission reception point, single-TRP, or single-panel transmission scheme; and
transmitting, by the terminal device, the first uplink information according to the transmission scheme for the first uplink information.

2. The method of claim 1, wherein the at least one signaling comprises a first signaling and/or a second signaling,
wherein the first signaling is for determining one of following transmission schemes: the TDM transmission scheme, the FDM transmission scheme, the SDM transmission scheme, or the SFN transmission scheme, and the second signaling is for determining TRP information or panel information.

3. The method of claim 2, wherein in a case where a bit state of the second signaling is for indicating that a single TRP or a single panel is used to transmit the first uplink information, the first signaling occupies 0 bit, or the at least one signaling does not comprise the first signaling; and/or
in a case where the bit state of the second signaling is for indicating that multiple TRPs or multiple panels are used to transmit the first uplink information, the first signaling occupies at least one bit, and different bit states of the first signaling are for respectively indicating at least two of the TDM transmission scheme, the FDM transmission scheme, the SDM transmission scheme, or the SFN transmission scheme.

4. The method of claim 3, wherein in a case where the first signaling occupies one bit, one bit state of the first signaling is for indicating the SDM transmission scheme, and another bit state of the first signaling is for indicating the SFN transmission scheme.

5. The method of claim 3, wherein in a case where the first signaling occupies two bits, different bit states of the first signaling are for respectively indicating at least three of the TDM transmission scheme, the FDM transmission scheme, the SDM transmission scheme, or the SFN transmission scheme.

6. The method of any one of claims 2 to 5, wherein the first signaling is associated with an antenna port signaling.

7. The method of claim 6, wherein in a case where a bit state of the second signaling is for indicating that multiple TRPs or multiple panels are used to transmit the first uplink information, and a bit state of the first signaling is for indicating the SDM transmission scheme, the antenna port signaling indicates that demodulation reference signal, DMRS, ports of different code division multiplexing, CDM, groups are used to transmit the first uplink information; or
in a case where the bit state of the second signaling is for indicating that multiple TRPs or multiple panels are used to transmit the first uplink information, and the bit state of the first signaling is for indicating the SFN transmission scheme, the antenna port signaling indicates that a same DMRS port is used to transmit the first uplink information.

8. The method of any one of claims 2 to 7, wherein the second signaling is a sounding reference signal, SRS, resource set indicator field, or the second signaling is an indicator field associated with a transmission configuration indicator, TCI.

9. The method of claim 1, wherein the at least one signaling comprises a third signaling, the third signaling being at least for determining one of following transmission schemes: the single-TRP or single-panel transmission scheme, the TDM transmission scheme, the FDM transmission scheme, the SDM transmission scheme, or the SFN transmission scheme.

10. The method of claim 9, wherein a bit state of the third signaling comprises at least one of: a first bit state, a second bit state, a third bit state, or a fourth bit state, and
wherein the first bit state is for indicating a first SDM transmission scheme, the second bit state is for indicating a second SDM transmission scheme, the third bit state is for indicating a first SFN transmission scheme, and the fourth bit state is for indicating a second SFN transmission scheme.

11. The method of claim 10, wherein part or all of a first SRS resource indicator field, a first precoding and a first number of transmission layers in the first SDM transmission scheme are associated with a first spatial parameter, and part or all of a second SRS resource indicator field, a second precoding and a second number of transmission layers in the first SDM transmission scheme are associated with a second spatial parameter; and/or
part or all of a second SRS resource indicator field, a second precoding and a second number of transmission layers in the second SDM transmission scheme are associated with the first spatial parameter, and part or all of a first SRS resource indicator field, a first precoding and a first number of transmission layers in the second SDM transmission scheme are associated with the second spatial parameter; and/or
part or all of a first SRS resource indicator field and a first precoding in the first SFN transmission scheme are associated with the first spatial parameter, and part or all of a second SRS resource indicator field and a second precoding in the first SFN transmission scheme are associated with the second spatial parameter; and/or
part or all of a second SRS resource indicator field and a second precoding in the second SFN transmission scheme are associated with the first spatial parameter, and part or all of a first SRS resource indicator field and a first precoding in the second SFN transmission scheme are associated with the second spatial parameter.

12. The method of claim 11, wherein in a case where a bit state of the third signaling is for indicating the first SDM transmission scheme or the second SDM transmission scheme, the first number of transmission layers is different from the second number of transmission layers; and/or
in a case where the bit state of the third signaling is for indicating the first SFN transmission scheme or the second SFN transmission scheme, the first number of transmission layers is the same as the second number of transmission layers.

13. The method of any one of claims 9 to 12, wherein the third signaling occupies at least 3 bits.

14. The method of any one of claims 9 to 13, wherein the third signaling is an SRS resource set indicator field, or the third signaling is an indicator field associated with a TCI.

15. The method of any one of claims 1 to 14, wherein a DCI format of the first DCI is DCI format 0_1 or DCI format 0_2.

16. The method of any one of claims 9 to 13, wherein the third signaling occupies available bits in the first DCI, and the first DCI does not carry downlink assignment information.

17. The method of claim 16, wherein a DCI format of the first DCI is DCI format 1_1 or DCI format 1_2.

18. The method of claim 1, wherein the at least one signaling comprises a fourth signaling,
wherein the fourth signaling is at least for determining one of following transmission schemes: the single-TRP or single-panel transmission scheme, or the TDM transmission scheme; or the fourth signaling is at least for determining one of following transmission schemes: the single-TRP or single-panel transmission scheme, the SDM transmission scheme, or the SFN transmission scheme.

19. The method of claim 18, further comprising:
before receiving, by the terminal device, the first DCI,
receiving, by the terminal device, first configuration information,
wherein the first configuration information is for configuring one of: the TDM transmission scheme, the SDM transmission scheme, or the SFN transmission scheme; or, the first configuration information is for configuring the TDM transmission scheme; or, the first configuration information is for configuring the SDM transmission scheme and the SFN transmission scheme.

20. The method of claim 19, wherein in a case where the first configuration information is for configuring the TDM transmission scheme, the fourth signaling is for determining one of following transmission schemes: the single-TRP or single-panel transmission scheme, or the TDM transmission scheme.

21. The method of claim 20, wherein some bit states in the fourth signaling are for indicating the single-TRP or single-panel transmission scheme, and some bit states in the fourth signaling are for indicating the TDM transmission scheme.

22. The method of claim 19, wherein in a case where the first configuration information is for configuring the SDM transmission scheme and/or the SFN transmission scheme, the fourth signaling is for determining one of following transmission schemes: the single-TRP or single-panel transmission scheme, the SDM transmission scheme, or the SFN transmission scheme.

23. The method of claim 22, wherein some bit states in the fourth signaling are for indicating the single-TRP or single-panel transmission scheme, some bit states in the fourth signaling are for indicating the SDM transmission scheme, and some bit states in the fourth signaling are for indicating the SFN transmission scheme.

24. The method of any one of claims 19 to 23, wherein the first configuration information is carried by one of:
a Radio Resource Control, RRC, signaling, or a Media Access Control Control Element, MAC CE, signaling.

25. The method of claim 1, wherein the at least one signaling comprises a fifth signaling,
wherein the fifth signaling is at least for determining one of following transmission schemes: the single-TRP or single-panel transmission scheme, or the TDM transmission scheme; or, the fifth signaling is at least for determining one of following transmission schemes: the single-TRP or single-panel transmission scheme, or the SDM transmission scheme; or, the fifth signaling is at least for determining one of following transmission schemes: the single-TRP or single-panel transmission scheme, or the SFN transmission scheme.

26. The method of claim 25, further comprising:
before receiving, by the terminal device, the first DCI,
receiving, by the terminal device, second configuration information,
wherein the second configuration information is for configuring one of at least one of following transmission schemes: the TDM transmission scheme, the SDM transmission scheme, or the SFN transmission scheme; and
wherein content corresponding to a bit state of the fifth signaling is associated with a transmission scheme configured by the second configuration information.

27. The method of claim 26, wherein if the second configuration information configures the SDM transmission scheme, the fifth signaling is for determining one of following transmission schemes: the single-TRP or single-panel transmission scheme, or the SDM transmission scheme;
if the second configuration information configures the SFN transmission scheme, the fifth signaling is for determining one of following transmission schemes: the single-TRP or single-panel transmission scheme, or the SFN transmission scheme;
if the second configuration information configures the TDM transmission scheme, the fifth signaling is for determining one of following transmission schemes: the single-TRP or single-panel transmission scheme, or the TDM transmission scheme.

28. The method of claim 27, wherein if the fifth signaling is for determining one of following transmission schemes: the single-TRP or single-panel transmission scheme, or the SDM transmission scheme, some bit states in the fifth signaling are for indicating the single-TRP or single-panel transmission scheme, and some bit states in the fifth signaling are for indicating the SDM transmission scheme.

29. The method of claim 27, wherein if the fifth signaling is for determining one of following transmission schemes: the single-TRP or single-panel transmission scheme, or the SFN transmission scheme, some bit states in the fifth signaling are for indicating the single-TRP or single-panel transmission scheme, and some bit states in the fifth signaling are for indicating the SFN transmission scheme.

30. The method of claim 27, wherein if the fifth signaling is for determining one of following transmission schemes: the single-TRP or single-panel transmission scheme, or the TDM transmission scheme, some bit states in the fifth signaling are for indicating the single-TRP or single-panel transmission scheme, and some bit states in the fifth signaling are for indicating the TDM transmission scheme.

31. The method of any one of claims 25 to 30, wherein if the fifth signaling is for determining the single-TRP or single-panel transmission scheme, a first precoding and/or a first number of transmission layers are determined based on a first maximum number of transmission layers.

32. The method of any one of claims 25 to 30, wherein if the fifth signaling is for determining the SDM transmission scheme or the SFN transmission scheme, a first precoding and/or a first number of transmission layers and a second precoding and/or a second number of transmission layers are determined based on a second maximum number of transmission layers and a third maximum number of transmission layers.

33. The method of any one of claims 1 to 32, further comprising:
before receiving, by the terminal device, the first DCI,
transmitting, by the terminal device, first information,
wherein the first information is for determining the at least one signaling in the first DCI, and the first information comprises at least one of: channel state information, CSI, path loss information, power headroom information, an SRS, or a channel state information reference signal, CSI-RS.

34. The method of any one of claims 1 to 32, further comprising:
before receiving, by the terminal device, the first DCI,
transmitting, by the terminal device, second information associated with a first spatial parameter and second information associated with a second spatial parameter,
wherein the second information associated with the first spatial parameter and the second information associated with the second spatial parameter are for determining the at least one signaling in the first DCI, and the second information comprises at least one of: CSI, path loss information, power headroom information, an SRS, or a CSI-RS.

35. The method of any one of claims 1 to 34, wherein the first uplink information comprises at least one of:
a physical uplink control channel, PUCCH, or a physical uplink shared channel, PUSCH.

36. A method for wireless communication, comprising:
transmitting, by a network device, first downlink control information, DCI, wherein at least one signaling in the first DCI is used by a terminal device to determine a transmission scheme for first uplink information, and the transmission scheme for the first uplink information is one of: a space division multiplexing, SDM, transmission scheme, a single frequency network, SFN, transmission scheme, a time division multiplexing, TDM, transmission scheme, a frequency division multiplexing, FDM, transmission scheme, or a single transmission reception point, single-TRP, or single-panel transmission scheme;
receiving, by the network device, the first uplink information transmitted by the terminal device according to the transmission scheme for the first uplink information.

37. The method of claim 36, wherein the at least one signaling comprises a first signaling and/or a second signaling,
wherein the first signaling is for determining one of following transmission schemes: the TDM transmission scheme, the FDM transmission scheme, the SDM transmission scheme, or the SFN transmission scheme, and the second signaling is for determining TRP information or panel information.

38. The method of claim 37, wherein in a case where a bit state of the second signaling is for indicating that a single TRP or a single panel is used to transmit the first uplink information, the first signaling occupies 0 bit, or the at least one signaling does not comprise the first signaling; and/or
in a case where the bit state of the second signaling is for indicating that multiple TRPs or multiple panels are used to transmit the first uplink information, the first signaling occupies at least one bit, and different bit states of the first signaling are for respectively indicating at least two of the TDM transmission scheme, the FDM transmission scheme, the SDM transmission scheme, or the SFN transmission scheme.

39. The method of claim 38, wherein in a case where the first signaling occupies one bit, one bit state of the first signaling is for indicating the SDM transmission scheme, and another bit state of the first signaling is for indicating the SFN transmission scheme.

40. The method of claim 38, wherein in a case where the first signaling occupies two bits, different bit states of the first signaling are for respectively indicating at least three of the TDM transmission scheme, the FDM transmission scheme, the SDM transmission scheme, or the SFN transmission scheme.

41. The method of any one of claims 37 to 40, wherein the first signaling is associated with an antenna port signaling.

42. The method of claim 41, wherein in a case where a bit state of the second signaling is for indicating that multiple TRPs or multiple panels are used to transmit the first uplink information, and a bit state of the first signaling is for indicating the SDM transmission scheme, the antenna port signaling indicates that demodulation reference signal, DMRS, ports of different code division multiplexing, CDM, groups are used to transmit the first uplink information; or
in a case where the bit state of the second signaling is for indicating that multiple TRPs or multiple panels are used to transmit the first uplink information, and the bit state of the first signaling is for indicating the SFN transmission scheme, the antenna port signaling indicates that a same DMRS port is used to transmit the first uplink information.

43. The method of any one of claims 37 to 42, wherein the second signaling is a sounding reference signal, SRS, resource set indicator field, or the second signaling is an indicator field associated with a transmission configuration indicator, TCI.

44. The method of claim 36, wherein the at least one signaling comprises a third signaling, the third signaling being at least for determining one of following transmission schemes: the single-TRP or single-panel transmission scheme, the TDM transmission scheme, the FDM transmission scheme, the SDM transmission scheme, or the SFN transmission scheme.

45. The method of claim 44, wherein a bit state of the third signaling comprises at least one of: a first bit state, a second bit state, a third bit state, or a fourth bit state, and
wherein the first bit state is for indicating a first SDM transmission scheme, the second bit state is for indicating a second SDM transmission scheme, the third bit state is for indicating a first SFN transmission scheme, and the fourth bit state is for indicating a second SFN transmission scheme.

46. The method of claim 45, wherein part or all of a first SRS resource indicator field, a first precoding and a first number of transmission layers in the first SDM transmission scheme are associated with a first spatial parameter, and part or all of a second SRS resource indicator field, a second precoding and a second number of transmission layers in the first SDM transmission scheme are associated with a second spatial parameter; and/or
part or all of a second SRS resource indicator field, a second precoding and a second number of transmission layers in the second SDM transmission scheme are associated with the first spatial parameter, and part or all of a first SRS resource indicator field, a first precoding and a first number of transmission layers in the second SDM transmission scheme are associated with the second spatial parameter; and/or
part or all of a first SRS resource indicator field and a first precoding in the first SFN transmission scheme are associated with the first spatial parameter, and part or all of a second SRS resource indicator field and a second precoding in the first SFN transmission scheme are associated with the second spatial parameter; and/or
part or all of a second SRS resource indicator field and a second precoding in the second SFN transmission scheme are associated with the first spatial parameter, and part or all of a first SRS resource indicator field and a first precoding in the second SFN transmission scheme are associated with the second spatial parameter.

47. The method of claim 46, wherein in a case where a bit state of the third signaling is for indicating the first SDM transmission scheme or the second SDM transmission scheme, the first number of transmission layers is different from the second number of transmission layers; and/or
in a case where the bit state of the third signaling is for indicating the first SFN transmission scheme or the second SFN transmission scheme, the first number of transmission layers is the same as the second number of transmission layers.

48. The method of any one of claims 44 to 47, wherein the third signaling occupies at least 3 bits.

49. The method of any one of claims 44 to 48, wherein the third signaling is an SRS resource set indicator field, or the third signaling is an indicator field associated with a TCI.

50. The method of any one of claims 36 to 49, wherein a DCI format of the first DCI is DCI format 0_1 or DCI format 0_2.

51. The method of any one of claims 44 to 48, wherein the third signaling occupies available bits in the first DCI, and the first DCI does not carry downlink assignment information.

52. The method of claim 51, wherein a DCI format of the first DCI is DCI format 1_1 or DCI format 1_2.

53. The method of claim 36, wherein the at least one signaling comprises a fourth signaling,
wherein the fourth signaling is at least for determining one of following transmission schemes: the single-TRP or single-panel transmission scheme, or the TDM transmission scheme; or the fourth signaling is at least for determining one of following transmission schemes: the single-TRP or single-panel transmission scheme, the SDM transmission scheme, or the SFN transmission scheme.

54. The method of claim 53, further comprising:
before transmitting, by the network device, the first DCI,
transmitting, by the network device, first configuration information,
wherein the first configuration information is for configuring one of: the TDM transmission scheme, the SDM transmission scheme, or the SFN transmission scheme; or, the first configuration information is for configuring the TDM transmission scheme; or, the first configuration information is for configuring the SDM transmission scheme and the SFN transmission scheme.

55. The method of claim 54, wherein in a case where the first configuration information is for configuring the TDM transmission scheme, the fourth signaling is for determining one of following transmission schemes: the single-TRP or single-panel transmission scheme, or the TDM transmission scheme.

56. The method of claim 55, wherein some bit states in the fourth signaling are for indicating the single-TRP or single-panel transmission scheme, and some bit states in the fourth signaling are for indicating the TDM transmission scheme.

57. The method of claim 54, wherein in a case where the first configuration information is for configuring the SDM transmission scheme and/or the SFN transmission scheme, the fourth signaling is for determining one of following transmission schemes: the single-TRP or single-panel transmission scheme, the SDM transmission scheme, or the SFN transmission scheme.

58. The method of claim 57, wherein some bit states in the fourth signaling are for indicating the single-TRP or single-panel transmission scheme, some bit states in the fourth signaling are for indicating the SDM transmission scheme, and some bit states in the fourth signaling are for indicating the SFN transmission scheme.

59. The method of any one of claims 54 to 58, wherein the first configuration information is carried by one of:
a Radio Resource Control, RRC, signaling, or a Media Access Control Control Element, MAC CE, signaling.

60. The method of claim 36, wherein the at least one signaling comprises a fifth signaling,
wherein the fifth signaling is at least for determining one of following transmission schemes: the single-TRP or single-panel transmission scheme, or the TDM transmission scheme; or, the fifth signaling is at least for determining one of following transmission schemes: the single-TRP or single-panel transmission scheme, or the SDM transmission scheme; or, the fifth signaling is at least for determining one of following transmission schemes: the single-TRP or single-panel transmission scheme, or the SFN transmission scheme.

61. The method of claim 60, further comprising:
before transmitting, by the network device, the first DCI,
transmitting, by the network device, second configuration information,
wherein the second configuration information is for configuring one of at least one of following transmission schemes: the TDM transmission scheme, the SDM transmission scheme, or the SFN transmission scheme; and
wherein content corresponding to a bit state of the fifth signaling is associated with a transmission scheme configured by the second configuration information.

62. The method of claim 61, wherein if the second configuration information configures the SDM transmission scheme, the fifth signaling is for determining one of following transmission schemes: the single-TRP or single-panel transmission scheme, or the SDM transmission scheme;
if the second configuration information configures the SFN transmission scheme, the fifth signaling is for determining one of following transmission schemes: the single-TRP or single-panel transmission scheme, or the SFN transmission scheme;
if the second configuration information configures the TDM transmission scheme, the fifth signaling is for determining one of following transmission schemes: the single-TRP or single-panel transmission scheme, or the TDM transmission scheme.

63. The method of claim 62, wherein if the fifth signaling is for determining one of following transmission schemes: the single-TRP or single-panel transmission scheme, or the SDM transmission scheme, some bit states in the fifth signaling are for indicating the single-TRP or single-panel transmission scheme, and some bit states in the fifth signaling are for indicating the SDM transmission scheme.

64. The method of claim 62, wherein if the fifth signaling is for determining one of following transmission schemes: the single-TRP or single-panel transmission scheme, or the SFN transmission scheme, some bit states in the fifth signaling are for indicating the single-TRP or single-panel transmission scheme, and some bit states in the fifth signaling are for indicating the SFN transmission scheme.

65. The method of claim 62, wherein if the fifth signaling is for determining one of following transmission schemes: the single-TRP or single-panel transmission scheme, or the TDM transmission scheme, some bit states in the fifth signaling are for indicating the single-TRP or single-panel transmission scheme, and some bit states in the fifth signaling are for indicating the TDM transmission scheme.

66. The method of any one of claims 60 to 65, wherein if the fifth signaling is for determining the single-TRP or single-panel transmission scheme, a first precoding and/or a first number of transmission layers are determined based on a first maximum number of transmission layers.

67. The method of any one of claims 60 to 65, wherein if the fifth signaling is for determining the SDM transmission scheme or the SFN transmission scheme, a first precoding and/or a first number of transmission layers and a second precoding and/or a second number of transmission layers are determined based on a second maximum number of transmission layers and a third maximum number of transmission layers.

68. The method of any one of claims 36 to 67, further comprising:
before transmitting, by the network device, the first DCI,
receiving, by the network device, first information;
wherein the first information is for determining the at least one signaling in the first DCI, and the first information comprises at least one of: channel state information, CSI, path loss information, power headroom information, an SRS, or a channel state information reference signal, CSI-RS.

69. The method of any one of claims 36 to 67, further comprising:
before transmitting, by the network device, the first DCI,
receiving, by the network device, second information associated with a first spatial parameter and second information associated with a second spatial parameter,
wherein the second information associated with the first spatial parameter and the second information associated with the second spatial parameter are for determining the at least one signaling in the first DCI, and the second information comprises at least one of: CSI, path loss information, power headroom information, an SRS, or a CSI-RS.

70. The method of any one of claims 36 to 69, wherein the first uplink information comprises at least one of:
a physical uplink control channel, PUCCH, or a physical uplink shared channel, PUSCH.

71. A method for wireless communication, comprising:
receiving, by a terminal device, sounding reference signal, SRS, resource indication information;
determining, by the terminal device, a transmission scheme for first uplink information according to a number of transmission configuration indicator, TCI, states associated with an SRS resource indicated by the SRS resource indication information, wherein the transmission scheme for the first uplink information is one of: a single transmission reception point, single-TRP, or single-panel transmission scheme, or a single frequency network, SFN, transmission scheme; and
transmitting, by the terminal device, the first uplink information according to the transmission scheme for the first uplink information.

72. The method of claim 71, wherein determining, by the terminal device, the transmission scheme for first uplink information according to the number of TCI states associated with the SRS resource indicated by the SRS resource indication information comprises:
in a case where the SRS resource indicated by the SRS resource indication information is associated with one TCI state, determining, by the terminal device, that the transmission scheme for first uplink information is the single-TRP or single-panel transmission scheme; and/or
in a case where the SRS resource indicated by the SRS resource indication information is associated with two TCI states, determining, by the terminal device, that the transmission scheme for first uplink information is the SFN transmission scheme.

73. The method of claim 71 or 72, wherein the SRS resource indicated by the SRS resource indication information belongs to a first SRS resource set or a second SRS resource set,
wherein each SRS resource in the first SRS resource set is associated with two TCI states, and each SRS resource in the second SRS resource set is associated with one TCI state.

74. The method of claim 73, wherein the first SRS resource set and/or the second SRS resource set are configured by a Radio Resource Control, RRC, signaling, and/or the first SRS resource set and/or the second SRS resource set are updated or adjusted by a Media Access Control Control Element, MAC CE, signaling.

75. The method of claim 71 or 72, wherein the SRS resource indicated by the SRS resource indication information belongs to a first SRS resource group or a second SRS resource group in a third SRS resource set,
wherein each SRS resource in the first SRS resource group is associated with two TCI states, and each SRS resource in the second SRS resource group is associated with one TCI state.

76. The method of claim 75, wherein the first SRS resource group and/or the second SRS resource group are configured by an RRC signaling, and/or the first SRS resource group and/or the second SRS resource group are updated or adjusted by an MAC CE signaling.

77. The method of any one of claims 71 to 76, wherein the SFN transmission scheme is associated with one SRS resource set and one SRS resource indicator field.

78. The method of any one of claims 71 to 77, wherein the first uplink information comprises at least one of:
a physical uplink control channel, PUCCH, or a physical uplink shared channel, PUSCH.

79. A method for wireless communication, comprising:
transmitting, by a network device, sounding reference signal, SRS, resource indication information, wherein a number of transmission configuration indicator, TCI, states associated with an SRS resource indicated by the SRS resource indication information is used by a terminal device to determine a transmission scheme for the first uplink information, and the transmission scheme for the first uplink information is one of: a single transmission reception point, single-TRP, or single-panel transmission scheme, or a single frequency network, SFN, transmission scheme; and
receiving, by the network device, the first uplink information transmitted by the terminal device according to the transmission scheme for the first uplink information.

80. The method of claim 79, wherein using the number of the TCI states associated with the SRS resource indicated by the SRS resource indication information by the terminal device to determine the transmission scheme for the first uplink information comprises:
in a case where the SRS resource indicated by the SRS resource indication information is associated with one TCI state, the transmission scheme for the first uplink information is the single-TRP or single-panel transmission scheme; and/or
in a case where the SRS resource indicated by the SRS resource indication information is associated with two TCI states, the transmission scheme for the first uplink information is the SFN transmission scheme.

81. The method of claim 79 or 80, wherein the SRS resource indicated by the SRS resource indication information belongs to a first SRS resource set or a second SRS resource set,
wherein each SRS resource in the first SRS resource set is associated with two TCI states, and each SRS resource in the second SRS resource set is associated with one TCI state.

82. The method of claim 81, wherein the first SRS resource set and/or the second SRS resource set are configured by a Radio Resource Control, RRC, signaling, and/or the first SRS resource set and/or the second SRS resource set are updated or adjusted by a Media Access Control Control Element, MAC CE, signaling.

83. The method of claim 79 or 80, wherein the SRS resource indicated by the SRS resource indication information belongs to a first SRS resource group or a second SRS resource group in a third SRS resource set,
wherein each SRS resource in the first SRS resource group is associated with two TCI states, and each SRS resource in the second SRS resource group is associated with one TCI state.

84. The method of claim 83, wherein the first SRS resource group and/or the second SRS resource group are configured by an RRC signaling, and/or the first SRS resource group and/or the second SRS resource group are updated or adjusted by an MAC CE signaling.

85. The method of any one of claims 79 to 84, wherein the SFN transmission scheme is associated with one SRS resource set and one SRS resource indicator field.

86. The method of any one of claims 79 to 85, wherein the first uplink information comprises at least one of:
a physical uplink control channel, PUCCH, or a physical uplink shared channel, PUSCH.

87. A terminal device, comprising:
a communication unit, configured to receive first downlink control information, DCI;
a processing unit, configured to determine a transmission scheme for first uplink information according to at least one signaling in the first DCI, wherein the transmission scheme for the first uplink information is one of: a space division multiplexing, SDM, transmission scheme, a single frequency network, SFN, transmission scheme, a time division multiplexing, TDM, transmission scheme, a frequency division multiplexing, FDM, transmission scheme, or a single transmission reception point, single-TRP, or single-panel transmission scheme,
wherein the communication unit is further configured to transmit the first uplink information according to the transmission scheme for the first uplink information.

88. A network device, comprising:
a communication unit, configured to transmit first downlink control information, DCI, wherein at least one signaling in the first DCI is used by a terminal device to determine a transmission scheme for first uplink information, and the transmission scheme for the first uplink information is one of: a space division multiplexing, SDM, transmission scheme, a single frequency network, SFN, transmission scheme, a time division multiplexing, TDM, transmission scheme, a frequency division multiplexing, FDM, transmission scheme, or a single transmission reception point, single-TRP, or single-panel transmission scheme,
wherein the communication unit is further configured to receive the first uplink information transmitted by the terminal device according to the transmission scheme for the first uplink information.

89. A terminal device, comprising:
a communication unit, configured to receive sounding reference signal, SRS, resource indication information; and
a processing unit, configured to determine a transmission scheme for first uplink information according to a number of transmission configuration indicator, TCI, states associated with an SRS resource indicated by the SRS resource indication information, wherein the transmission scheme for the first uplink information is one of: a single transmission reception point, single-TRP, or single-panel transmission scheme, or a single frequency network, SFN, transmission scheme,
wherein the communication unit is further configured to transmit the first uplink information according to the transmission scheme for the first uplink information.

90. A network device, comprising:
a communication unit, configured to transmit sounding reference signal, SRS, resource indication information, wherein a number of transmission configuration indicator, TCI, states associated with an SRS resource indicated by the SRS resource indication information is used by a terminal device to determine a transmission scheme for the first uplink information, and the transmission scheme for the first uplink information is one of: a single transmission reception point, single-TRP, or single-panel transmission scheme, or a single frequency network, SFN, transmission scheme,
wherein the communication unit is further configured to receive the first uplink information transmitted by the terminal device according to the transmission scheme for the first uplink information.

91. A terminal device, comprising: a processor and a memory storing a computer program, wherein the processor is configured to call and execute the computer program stored in the memory to cause the terminal device to perform the method of any one of claims 1 to 35.

92. A network device, comprising: a processor and a memory storing a computer program, wherein the processor is configured to call and execute the computer program stored in the memory to cause the network device to perform the method of any one of claims 36 to 70.

93. A terminal device, comprising: a processor and a memory storing a computer program, wherein the processor is configured to call and execute the computer program stored in the memory to cause the terminal device to perform the method of any one of claims 71 to 78.

94. A network device, comprising: a processor and a memory storing a computer program, wherein the processor is configured to call and execute the computer program stored in the memory to cause the network device to perform the method of any one of claims 79 to 86.

95. A chip, comprising: a processor, configured to call and execute a computer program in a memory to cause a device equipped with the chip to perform a method of any one of claims 1 to 35, or cause the device equipped with the chip to perform a method of any one of claims 36 to 70, or cause the device equipped with the chip to perform a method of any one of claims 71 to 78, or a cause the device equipped with the chip to perform a method of any one of claims 79 to 86.

96. A computer-readable storage medium, configured to store a computer program, wherein when the computer program is executed, the method of any one of claims 1 to 35 is implemented, or the method of any one of claims 36 to 70 is implemented, or the method of any one of claims 71 to 78 is implemented, or the method of any one of claims 79 to 86 is implemented.

97. A computer program product, comprising computer program instructions, wherein when the computer program instructions are executed, the method of any one of claims 1 to 35 is implemented, or the method of any one of claims 36 to 70 is implemented, or the method of any one of claims 71 to 78 is implemented, or the method of any one of claims 79 to 86 is implemented.

98. A computer program, wherein when the computer program is executed, the method of any one of claims 1 to 35 is implemented, or the method of any one of claims 36 to 70 is implemented, or the method of any one of claims 71 to 78 is implemented, or the method of any one of claims 79 to 86 is implemented.
